(19) **Europäisches Patentamt**

**European Patent Office**

**Office européen des brevets**

(11) **EP 1 106 237 B1**

(12) **EUROPEAN PATENT SPECIFICATION**

(45) Date of publication and mention
of the grant of the patent:
**13.10.2004 Bulletin 2004/42**

(51) Int Cl.⁷: **B01D 53/50**, C02F 1/76,
C02F 1/62, C02F 9/04

(21) Application number: **00925662.9**

(22) Date of filing: **15.05.2000**

(86) International application number:
**PCT/JP2000/003093**

(87) International publication number:
**WO 2000/069545 (23.11.2000 Gazette 2000/47)**

(54) **METHOD OF TREATING WASTE WATERS FROM A FLUE GAS DESULPHURISER**

VERFAHREN ZUR BEHANDLUNG DER ABWÄSSER EINER
ABGASENENTSCHWEFELUNGSANLAGE

PROCEDE POUR LE TRAITEMENT DES EAUX USEES D'UNE UNITE DE DESULFURATION DE
GAZ DE COMBUSTION

(84) Designated Contracting States:
**DE GB**

(30) Priority: **17.05.1999 JP 13527999**
**22.06.1999 JP 17515599**
**22.06.1999 JP 17515699**
**28.12.1999 JP 37243099**

(43) Date of publication of application:
**13.06.2001 Bulletin 2001/24**

(60) Divisional application:
**01108042.1 / 1 134 195**
**01108043.9 / 1 129 997**

(73) Proprietor: **Mitsubishi Heavy Industries, Ltd.**
**Tokyo 100-8315 (JP)**

(72) Inventors:
• **YOSHIOKA, Atsushi,**
**Mitsubishi Heavy Industr., Ltd.**
**Tokyo 100-8315 (JP)**
• **IWASHITA, Koichiro,**
**Mitsubishi Heavy Indus., Ltd.**
**Tokyo 100-8315 (JP)**
• **OCHI, Eiji, Mitsubishi Heavy Industries, Ltd.**
**Tokyo 100-8315 (JP)**
• **SHINODA, Takeo,**
**Mitsubishi Heavy Industries, Ltd.**
**Tokyo 100-8315 (JP)**
• **OKINO, Susumu, Mitsubishi Heavy Industr., Ltd.**
**Hiroshima-shi 733-0036 (JP)**
• **KAMIYOSHI, Hideki,**
**Shinryo High Technologies, Ltd.**
**Kobe-shi, Hyogo 652-0865 (JP)**
• **BABA, Hiroshi, Shinryo High Technologies, Ltd.**
**Kobe-shi, Hyogo 652-0865 (JP)**
• **ITO, Tetsuya, Shinryo High Technologies, Ltd.**
**Kobe-shi, Hyogo 652-0865 (JP)**
• **ENDO, Atsumasa,**
**Shinryo High Technologies, Ltd.**
**Kobe-shi, Hyogo 652-0865 (JP)**
• **NISHIDA, Morikata,**
**Shinryo High Technologies, Ltd.**
**Kobe-shi, Hygo 652-0865 (JP)**

(74) Representative: **Goddard, David John et al**
**Harrison Goddard Foote**
**Orlando House**
**11c Compstall Road**
**Marple Bridge**
**Stockport SK6 5HH (GB)**

(56) References cited:
**EP-A1- 0 465 439**    **DE-A- 3 901 184**
**GB-A- 1 505 281**    **JP-A- 7 075 778**
**JP-A- 9 029 267**    **JP-A- 9 248 576**
**JP-A- 11 137 958**    **JP-A- 57 127 487**
**JP-A- 60 183 091**    **US-A- 5 266 286**

**Description**

The present invention relates to a flue gas desulphurisation method including the treatment of desulphurisation waste water and the treatment of absorbent slurry and a flue gas desulphurisation system. More particularly, it relates to a flue gas desulphurisation method carried out by a wet lime-gypsum process in which sulphur oxide and nitrogen oxide in flue gas are absorbed and separated by using absorbent slurry of limestone or hydrated lime, a flue gas desulphurisation system capable of properly carrying out the above-described method and a treatment method for the above-described absorbent slurry, a method for effecting treatment for making waste water, which is discharged when sulphur oxide gas in combustion flue gas is desulphurised by the wet lime-gypsum process and especially by soot mixing desulphurisation treatment and the like methods.

Combustion flue gas produced by combustion using coal or the like as a fuel is treated by using a desulphuriser using the lime-gypsum method, and waste water containing heavy metals such as cadmium and manganese, difficult-to-decompose COD components (components responsible for chemical oxygen demand), and fluorine components is discharged.

Conventionally, as a method for removing heavy metals, especially manganese $Mn^{2+}$, in desulphurisation waste water, there has been available a method for treating heavy metals in an alkaline region of pH 10 to 12. In this method, manganese is precipitated as manganese hydroxide by adjusting pH. Thereby, the quantity of manganese ions in treated water is made 10 mg/L or smaller.

With this method, however, magnesium in desulphurisation waste water deposits as magnesium hydroxide, so that a large amount of sludge is produced, which presents a problem in that the size of a sludge treatment apparatus increases. Also, because this treated water has a high pH value, pollutants such as fluorine must further be treated on the downstream side, or the pH value must be decreased to a value close to neutrality to meet the effluent regulation standard, which presents a problem of increasing running cost.

Conventionally, there has been used a method in which in order to reduce a large amount of sludge such as deposited magnesium hydroxide, the sludge is absorbed in gypsum. In this method, however, the hydroxide is mixed with desulphurisation gypsum and is dehydrated, so that the operation control of a gypsum separator becomes difficult to accomplish, and at the same time, an adverse influence on the water content and purity of the obtained gypsum is brought about.

Further, as a method for removing $Mn^{2+}$ in desulphurisation waste water, there has been disclosed a method for removing it as manganese dioxide by adding permanganate to adjust the pH to 3 to 8. However, the use of expensive permanganate poses a problem of increasing running cost.

On the other hand, the difficult-to-decompose COD components contained in desulphurisation waste water include inorganic COD components and organic COD components. The inorganic COD components consist of nitrogen-sulphur compounds (hereinafter referred to as "N-S compounds") yielded by the reaction of $SO_2$ absorbed in the absorbent in the desulphuriser with some of NOx. Also, the organic COD components consist mainly of organic components in industrial water used as make-up water for the desulphuriser.

These COD components have difficulty in being removed by a coagulative precipitation method using an ordinary coagulant or by an activated sludge method using micro-organism, so that it is very difficult to attain the effluent standard (for example, 20 mg/L or less) of COD components.

As a method for decomposing N-S compounds of the above-described COD compounds, a method for decomposing nitrite ($NO_2^-$) has been known well. With this method, sodium nitrite is added in a fixed ratio, and decomposition is effected under conditions of pH of 2 and less and a temperature of $45°C$ and higher.

The discharged desulphurisation waste water is usually neutral or weakly acidic, so that a large amount of acid is needed to provide pH of 2 and less. Moreover, a large amount of alkaline agent is needed to restore the neutrality or weak alkalinity after the reaction has been finished. Therefore, there arises a drawback in that wasteful cost for chemicals and much manpower are required.

Also, there is available a method in which after some of absorbent slurry in the desulphuriser is extracted and is subjected to solid-liquid separation, the pH value of separated liquid (filtrate) is adjusted to be 3 to 4 and hypochlorite is added, by which N-S compounds are removed. With this treatment method, the N-S compounds in treated water can be removed to a level of 5 mg/L (milligram/litre) and less of COD.

However, although the N-S compounds in desulphurisation waste water can be treated by this treatment method, a method for collectively treating coexistent components such as manganese and other heavy metals and organic COD components has not yet been studied. Moreover, the organic COD components contained in desulphurisation waste water are also very difficult to decompose. Therefore, there arises a problem in that in order to sufficiently adsorb and remove the organic components, the size of adsorption facility must be increased.

As described above, as the treatment method for COD components, there are available the coagulative precipitation method using an ordinary coagulant and the activated sludge method using micro-organism. Also, as the method for decomposing N-S compounds, the nitrite decomposing method has been known well. However, from the viewpoint of the cost of chemicals and the workability, a method has also been known in which after some of absorbent slurry in the desulphuriser is extracted and is subjected to solid-liquid separation, the pH value of separated liquid (filtrate) is adjusted and an oxidising agent is added, by which N-S compounds are removed.

In the treatment method for desulphurisation waste water, in addition to the treatment of N-S compounds in desulphurisation waste water, coexistent components such as other organic COD, fluorine, and heavy metals must be treated.

Because the organic COD components contained in desulphurisation waste water are difficult to decompose, as a treatment method for difficult-to-decompose organic COD components, an activated charcoal adsorption method has generally been used. However, the adsorbing property to activated charcoal is very low. Therefore, in order to sufficiently adsorb and remove the organic components, the size of adsorption facility must be increased.

Also, as a treatment method for waste water containing fluorine, a calcium coagulative precipitation method in which fluorine is removed as calcium fluoride by adding calcium ions to fluorine ions has generally been used, and as a treatment method that is an improvement on the above-described method, a two-stage coagulative precipitation method is well known. In this method, after precipitate consisting of hydroxides etc. of heavy metals yielded by the addition of hydrated lime is once removed, an alkaline agent such as sodium hydroxide is added to yield an alkaline region, by which magnesium ions are deposited as precipitate of magnesium hydroxide (hydroxide), and at the same time, the remaining fluorine ions are coprecipitated and separated.

Such conventional treatment methods have a problem in that the desulphurisation waste water treatment process for flue gas desulphurisation is large in scale and complicated, and the process produces a large amount of wastes.

Also, conventionally, some of filtrate after the separation of gypsum has been treated as waste water by the COD treatment, separation by coagulative precipitation, activated charcoal treatment, fluorine treatment, and the like, and studies have been made as the treatment method for desulphurisation waste water, so that complicated post-treatment is necessary.

Specifically, in the prior art, absorbent slurry flows from the desulphuriser to a gypsum separator directly, and gypsum is removed by the gypsum separator. However, the filtrate contains heavy metals and other components. After the gypsum separation process, some of the filtrate is extracted as waste water to a filtrate treatment process, and processes of COD decomposition, coagulative precipitation by the addition of a heavy metal chelating agent, activated charcoal adsorption, and fluorine adsorption are carried out in succession. By such complicated treatment in the post-treatment process, heavy metals can be separated and removed. On the other hand, if the filtrate is separated after the separation of gypsum, SS components are always produced as sludge in the subsequent waste water treatment process. The cost for treating a large amount of sludge is high, so that this treatment method is disadvantageous in terms of cost.

Therefore, in the conventional plant, a method can be used in which in order to decrease the amount of sludge coming from the waste water treatment, the sludge is mixed again at the preceding stage of the gypsum separation process, in other words, in order to decrease the amount of discharged sludge, the sludge coming from the waste water treatment is further contained in gypsum. In this method, all solid content (hydroxide, etc.) yielded by the separation of SS components effected by coagulative separation etc. is mixed with absorbent slurry after the desulphurisation process and is mixed in gypsum.

However, in the case where the sludge after coagulative precipitation is returned to the preceding stage of the gypsum separation by this method, if the returned matter is hydroxide, the amount of sludge increases, or the operation control of the gypsum separator at the time of dehydration becomes difficult and complicated. That is to say, since the hydroxide yielded by the desulphurisation waste water treatment process is mixed with desulphurisation gypsum and is dehydrated, the operation control of the gypsum separator becomes difficult to accomplish, and at the same time, an adverse influence on the water content and purity of the obtained gypsum is liable to be brought about.

As described above, in the waste water treatment that is conducted for some filtrate after gypsum separation, sludge mainly containing SS components and wastes containing heavy metals etc. contained in waste water are sent together, so that various complicated processes are needed for the treatment.

On the other hand, in the waste water treatment process after the gypsum separation process, a process in which a heavy metal chelating agent, a coagulation assistant, permanganate, or the like is added to the filtrate has so far been conducted. For the above-described treatment process, for example, the desulphurisation process and the waste water treatment process have undergone technical development independently.

Therefore, a thorough study has not been made on whether the treatment can be promoted as the whole system, the treatment facility can be simplified, and the quantity of sludge can be decreased by efficiently combining the desulphurisation process and the waste water treatment process.

Accordingly, a first object of the present invention is to remove heavy metals, especially manganese, in desulphurisation waste water while solving problems with the above-described prior art.

The present invention provides a desulphurisation waste water treatment method for removing manganese from waste water, said waste water having been discharged from a wet type flue gas desulphuriser for absorbing and separating sulphur oxide in combustion flue gas by using a wet lime-gypsum process, wherein the waste water is treated with hypochlorite at a pH below 7 so that the resulting redox potential is at least 600 mV and the pH of the resulting solution is thereafter adjusted to lie in the range 7 to 9.5, followed by solid-liquid separation.

The use of hypochlorite for treating desulphurisation waste water to separate manganese is also contemplated in JP-A-09029267 (Kurita Water Ind). However, in the present invention, the pH is not adjusted to the range 7 to 9.5 until after the hypochlorite treatment.

Waste waster is also treated with hypochlorite in US 5,266,286 (Mitsubishi), but here the purpose is to oxidize the iodine and so to permit the iodine content to be reduced, since iodine is acknowledged to interfere with the desulphurisation process. The process is carried out exclusively in an acid environment, and there is no pH adjustment following the addition of hypochlorite.

In the present invention sulphite/bisulphite and a heavy metal chelating agent may be added between said adjustment of the pH value and said solid-liquid separation, preferably so that the oxidation-reduction potential is 200 mV and higher. Preferably the liquid to which said sulphite/bisulphite is added is agitated by air.

The solid-liquid separation may be a microfiltration membrane separation, and preferably during the separation the filtrate agitated by air.

The present invention enables the treatment of waste water containing heavy metals, especially manganese, including waste water discharged from a wet type flue gas desulphuriser for absorbing and separating sulphur oxide in combustion flue gas by using a wet lime-gypsum process. Not only can manganese and other heavy metals be removed efficiently by using a simple apparatus, but also the concentration of manganese in the treated water can be made low and stable.

Furthermore, since waste water is treated in a neutral or weakly alkaline environment having a pH value of 9.5 and lower, for example, 7 to 9.5, in which magnesium ions do not turn into magnesium hydroxide, the quantity of produced sludge is small, which is economical.

In view of the above-described problems, a second object was to develop a system with which the treatment efficiency in a desulphurisation process and a waste water treatment process in the flue gas desulphurisation system can be enhanced, and also the quantity of sludge discharged by the treatment can be decreased. Our divisional European Patent Application No. 01108043.9 relates to this type of system, the invention thereof hereafter being referred to as a "second aspect".

The inventors found that the problems can be solved by effectively combining the desulphurisation process and the waste water treatment process into a unit in the flue gas desulphurisation system. The present invention was completed from this point of view. According to the second aspect, components such as difficult-to-decompose COD components, heavy metals, and fluorine can be removed efficiently and sufficiently from absorbent slurry of the wet type flue gas desulphuriser for coal combustion flue gas, and also the desulphuriser can be operated efficiently and waste water can be treated easily while preventing sludge from being produced in the waste water treatment.

The second aspect relates to an absorbent slurry treatment method for treating absorbent slurry in which sulphur oxide gas in flue gas is absorbed, wherein after a mixing process in which a heavy metal chelating agent is added to and mixed with the absorbent slurry, there are provided a gypsum separation process in which gypsum is separated, an oxidation process in which an oxidising agent is added to filtrate coming from the gypsum separation process, and a membrane separation process in which liquid coming from the oxidation process is filtrated by using a separation membrane. For example, in one mode, as the absorbent slurry, slurry in which sulphur oxide gas is absorbed in the desulphurisation process is used, and some of the liquid having been subjected to the gypsum separation process and oxidation process is returned to the desulphurisation process as concentrate.

In the above-described treatment method, in addition to the processes described above, there can be provided an activated charcoal adsorption process in which membrane filtrate subjected to the membrane separation process is brought into contact with activated charcoal and a fluorine adsorption process in which treated liquid coming from the activated charcoal adsorption process is brought into contact with a fluorine adsorption resin. There is also provided a mode in which in the mixing process, a solidifying substance such as permanganate is added in addition to the heavy metal chelating agent.

The heavy metal chelating agent is preferably dithiocarbamic acid group or thiol group or both of them. The treated liquid coming from the oxidation process preferably goes to the membrane separation process after being treated in a neutralisation process in which a reducing agent is added. As the oxidising agent, for example, hypochlorite is preferable. Also, as the reducing agent, a flue gas or the like can be used.

For the treatment method in accordance with the second aspect, a mode is preferably used in which a solid substance separated in the membrane separation process is returned to the mixing process, and sent to the gypsum separation process after being mixed with the absorbent slurry, or a mode is preferably used in which recycled waste liquid in the fluorine adsorption process is returned to the desulphurisation process.

Also, the second aspect provides a flue gas desulphurisation system using a wet lime-gypsum process in which sulphur oxide gas in flue gas is absorbed and separated by using absorbent slurry of limestone or hydrated lime, comprising a mixing tank in which a heavy metal chelating agent is added to and mixed with the absorbent slurry, a gypsum separator for separating gypsum, an oxidation tank in which hypochlorite is added to filtrate from which gypsum is separated, and a membrane separation tank in which liquid coming from the oxidation process is filtrated. The above-described flue gas desulphurisation system can comprise, in addition to the elements described above, an activated charcoal adsorption tower in which filtrate coming from the membrane separation process is brought into contact with activated charcoal and a fluorine adsorption tower in which treated liquid coming from the activated charcoal adsorption tower is brought into contact with a fluorine adsorption resin. There is also provided a mode in which in the mixing tank, a solidifying substance such as permanganate is added in addition to the heavy metal chelating agent. Further, there is also provided a mode in which a neutralisation tank in which a reducing agent is added to treated liquid coming from the oxidation tank is provided between the oxidation tank and the membrane separation tank.

The separation membrane is preferably a tubular type microfiltration membrane, a submerged type flat-plate microfiltration membrane, or a submerged type hollow-fibre microfiltration membrane. The fluorine adsorption resin is preferably a zirconium carrier type resin or a caesium carrier type resin.

A mode is preferably used in which in the flue gas desulphurisation system, the membrane separation tank and the neutralisation tank are installed in an absorption tower of the desulphuriser.

The absorbent slurry to be treated, which is slurry in which sulphur oxide gas in flue gas is absorbed by using limestone or hydrated lime, contains COD components, heavy metals, fluorine, and the like in addition to sulphur oxide.

In the second aspect, by effectively combining the treatment process and desulphurisation process (desulphuriser) into a unit in the treatment process, wastes etc. containing heavy metals are mixed with desulphurisation gypsum to reduce wastes requiring complicated treatment, and the quantity of finally treated wastes discharged as sludge is decreased. Also, the treatment process is made as simple as possible, by which the desulphurisation process and the waste water treatment process can be carried out efficiently as a unit.

Some treatment processes that have so far been carried out for waste water treatment are carried out immediately after the desulphurisation process, by which the whole treatment is promoted and is made efficient. After the mixing tank in which the chelating agent is added, the gypsum separation process (solid content separation), the oxidation process (COD decomposition process), and the membrane separation process (solid content separation process) are carried out in this order.

The quantity of deposited sludge is far smaller than the quantity of by-product gypsum, and sludge is hardly produced. Also, since no hydroxide is produced in the waste water treatment, the hydroxide need not be mixed with gypsum, so that the water content and purity of gypsum are not influenced adversely.

Also, by using the separation process using the separation membrane in place of the conventional coagulative separation process, sand filtration process, and the like, the treatment process can be simplified, and also the increased size of equipment and the necessity of a large-scale treatment facility can be avoided.

In view of the above-described problems a third object is to develop a flue gas desulphurisation method or system in which NS compounds having an adverse influence on the desulphurisation performance can be removed effectively, and at the same time, heavy metals, especially manganese, in desulphurisation waste water can be removed favourably in terms of economy as well.

The inventors found that the problems can be solved by a treatment method in which after gypsum separation, the pH value of filtrate is adjusted to 3 to 4 and an oxidising agent such as hypochlorite is added, and after neutralisation, liquid is subjected to solid-liquid separation, in the flue gas desulphurisation method. Our divisional European Patent Application No. 01108042.1 relates to this type of system, the invention thereof hereafter being referred to as a "third aspect".

The third aspect provides a flue gas desulphurisation method using a wet lime process for treating flue gas containing sulphur oxide and nitrogen oxide, comprising an oxidation process in which the pH value of all or some of filtrate is adjusted to 3 to 4 and an oxidising agent is added after some of absorbent slurry in a desulphurisation process is extracted and gypsum is separated, a neutralisation process in which an alkaline agent is mixed with the mixed liquid to adjust the pH value to 7 to 9.5, and a solid-liquid separation process in which the neutralised adjusted liquid is subjected to solid-liquid separation. There is also provided a mode in which after a heavy metal chelating agent is added to some of the absorbent slurry extracted from the desulphurisation process, gypsum is separated.

The solid-liquid separation is preferably effected by membrane separation. Some of solid substance concentrate yielded by the solid-liquid separation can be mixed with the absorbent slurry to be subjected to solid-liquid separation or can be supplied to the absorption tower as make-up water.

Also, filtrate subjected to the solid-liquid separation can be discharged to the outside of the system as waste water. In the neutralisation process, sulphite or sulphurous acid gas is preferably added.

Further, the third aspect provides a flue gas desulphurisation system using a wet lime process for treating flue gas containing sulphur oxide and nitrogen oxide, wherein on the downstream side of a gypsum separator for separating gypsum from absorbent slurry introduced from an absorption tower, there are provided an oxidation tank in which the pH value of all or some of filtrate from which gypsum has been separated is adjusted to 3 to 4 and an oxidising agent is added, a neutralisation tank in which an alkaline agent is mixed with the liquid coming from the oxidation tank to adjust the pH value to 7 to 9.5, and a membrane separation tank in which the liquid coming from the neutralisation tank is subjected to solid-liquid separation by using a membrane.

In the system in accordance with the third aspect, there is preferably used a mode in which the oxidation tank, neutralisation tank, and membrane separation tank on the downstream side of the gypsum separator are arranged vertically as a unit under the gypsum separator so that fluid flows down from the gypsum separator to the oxidation tank, from the oxidation tank to the neutralisation tank, and from the neutralisation tank to the membrane separation tank in succession, or a mode in which the oxidation tank, neutralisation tank, and membrane separation tank are arranged vertically under the gypsum separator so that fluid flows down from the gypsum separator to the oxidation tank and from the neutralisation tank to the membrane separation tank in succession. Some of solid substance concentrate yielded by the solid-liquid separation can be mixed with the absorbent slurry to be subjected to solid-liquid separation, or can be supplied to the absorption tower as make-up water. Also, filtrate subjected to the solid-liquid separation can be discharged to the outside of the system as waste water.

In the third aspect, N-S compounds having an influence on the desulphurisation performance are removed, by which an adverse influence on the desulphurisation performance can be avoided.

Since the quantity of deposited sludge is far smaller than the quantity of by-product gypsum, and sludge is hardly produced, even if solid substance concentrate is sent again to the preceding stage of the gypsum separator, the water content and purity of gypsum are not influenced adversely.

Also, when sodium hypochlorite or the like is used as an oxidising agent, because it is an inexpensive chemical, the running cost is low.

Further, N-S compounds, which are difficult-to-decompose COD, and manganese ions $Mn^{2+}$ can be treated efficiently at the same time, and the burden on the waster water treatment can be alleviated, so that the waste water treatment system can be simplified. According to the third aspect as described above, waste water etc. containing heavy metals, especially manganese, discharged from the wet type flue gas desulphuriser can be treated, so that the concentration of manganese in the treated water is low and stable.

Further features and advantages of the invention will become apparent upon a reading of the appended claims, to which the reader is directed, and also upon consideration of the following description of exemplary systems made with reference to the accompanying drawings, in which:

FIG. 1 is a system diagram of one embodiment of a waste water treatment method in accordance with the present invention;

FIG. 2 is a system diagram of another embodiment of a waste water treatment method in accordance with the present invention;

FIG. 3 is a system diagram of still another embodiment of a waste water treatment method in accordance with the present invention;

FIG. 4 is a configuration diagram schematically showing one example of a flue gas desulphurisation system in accordance with the aforesaid second aspect;

FIG. 5 is a configuration diagram schematically showing another example of a flue gas desulphurisation system in accordance with the aforesaid second aspect;

FIG. 6 is a configuration diagram schematically showing still another example of a flue gas desulphurisation system in accordance with the aforesaid second aspect;

FIG. 7 is a configuration diagram schematically showing still another example of a flue gas desulphurisation system in accordance with the aforesaid second aspect;

FIG. 8 is a system diagram showing one example of a system for carrying out a flue gas desulphurisation method in accordance with the aforesaid third aspect;

FIG. 9 is a system diagram showing another example of a system for carrying out a flue gas desulphurisation method in accordance with the aforesaid third aspect;

FIG. 10 is a system diagram showing still another example of a system for carrying out a flue gas desulphurisation method in accordance with the aforesaid third aspect;

FIG. 11 is a system diagram showing still another example of a system for carrying out a flue gas desulphurisation method in accordance with the aforesaid third aspect;

FIG. 12 is a system diagram showing still another example of a system for carrying out a flue gas desulphurisation method in accordance with the aforesaid third aspect; and

FIG. 13 is a system diagram showing still another example of a system for carrying out a flue gas desulphurisation method in accordance with the aforesaid third aspect.

In the above figures, reference numeral 1 denotes a desulphuriser, 2 denotes a circulating pump, 3 denotes absorbent slurry, 4 denotes a mixing tank, 5 denotes a heavy metal chelating agent, 6 denotes a coagulation assistant, 7 denotes permanganate, 8 denotes mixed liquid, 9 denotes a gypsum separator, 10 denotes gypsum, 10a denotes gypsum cake, 11 denotes filtrate, 12 denotes an oxidation tank, 13 denotes acid, 14 denotes hypochlorite, 15 denotes an oxidation reaction tank, 16 denotes a neutralisation tank, 17 denotes alkali, 18 denotes a reducing agent, 19 denotes neutralisation reaction liquid, 20 denotes a membrane separation tank, 21 denotes a separation membrane, 22 denotes air, 23 denotes an air-diffusing pipe, 24 denotes a concentrate pump, 25 denotes concentrate, 26 denotes a precipitate pump, 27 denotes precipitate slurry, 28 denotes membrane filtrate (membrane separation liquid), 29 denotes a receiver, 30 denotes a vacuum pump, 31 denotes flue gas, 32 denotes a membrane separation liquid tank, 33 denotes an activated charcoal pump, 34 denotes an activated charcoal adsorption tank, 35 denotes activated charcoal treated water, 36 denotes an activated charcoal treated water tank, 37 denotes a fluorine adsorption tower pump, 38 denotes a fluorine adsorption tower, 39 denotes fluorine treated water, 40 denotes a treated water tank, 41 denotes treated water, 42 denotes recycled waste liquid, 43 denotes a recycled waste liquid tank, 44 denotes a recycled waste liquid pump, 101 denotes flue gas, 102 denotes an absorption tower, 103 denotes outlet gas, 104 denotes a slurry tank, 105 denotes an absorbent pump, 106 denotes an oxidising air supply line, 107 denotes an absorbent slurry draw line, 108 denotes a gypsum separator, 109 denotes gypsum, 110, 110a, and 110b denote filtrate, 111 denotes an oxidation tank, 112 denotes acid, 113 denotes an oxidising agent, 114 denotes alkali, 115 denotes a reducing agent (sulphite, sulphurous acid gas, or bisulphite), 116 denotes a neutralisation tank, 117 denotes a membrane separation tank, 118 denotes a separation membrane, 119 denotes a vacuum pump, 120 denotes a receiver, 121 denotes membrane filtrate, 122 denotes a solid substance concentrate pump, 123 denotes solid substance concentrate, 124 denotes overflow water, 125 denotes a limestone preparation tank, 126 denotes limestone, 127 denotes a limestone slurry supply pump, 130 denotes a mixing tank, and 131 denotes a heavy metal chelating agent.

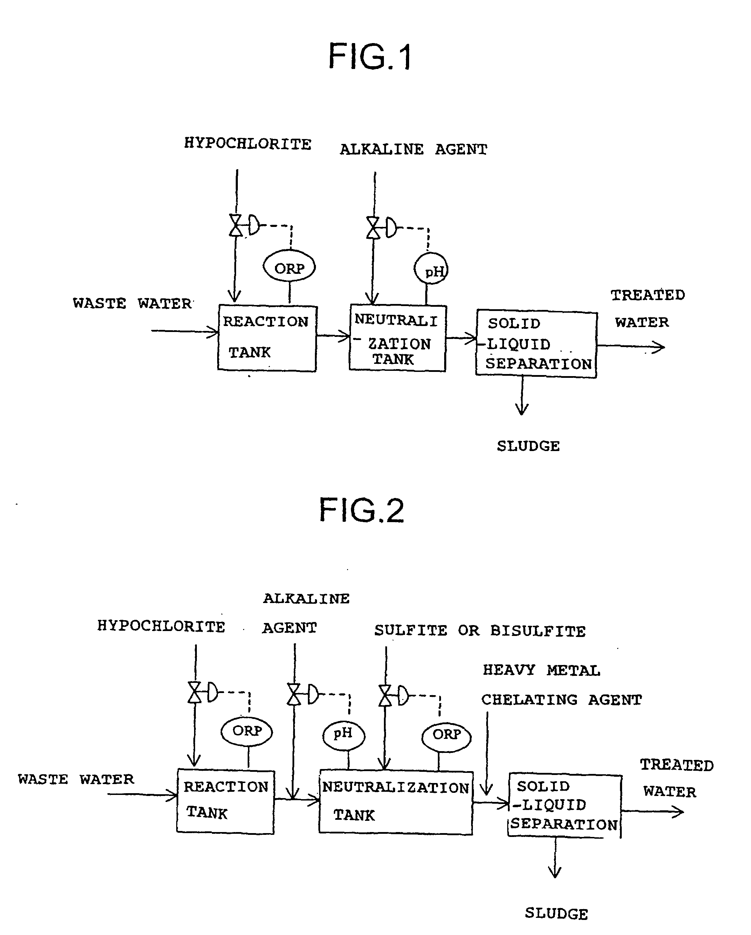

One example for carrying out a method in accordance with the present invention will be described with reference to FIG. 1. The present invention is not limited to this embodiment.

In the present invention, after hypochlorite is added to desulphurisation waste water, the pH value is adjusted to 7 to 9.5, and solid-liquid separation is effected to remove manganese in the desulphurisation waste water.

In the desulphurisation waste water treatment method in accordance with the present invention, hypochlorite is first added to waste water having been introduced into a reaction tank and the waste water is mixed. As hypochlorite, sodium hypochlorite, bleaching powder, and the like can be used, and sodium hypochlorite is preferably used from the viewpoint of handling.

The pH value of desulphurisation waste water is usually in an acidic region, and in the case where an oxidisable substance such as an organic substance is present in the waste water, when the waste water is mixed with hypochlorite, hypochlorite is consumed by the oxidation. Therefore, as a necessity for oxidation of the oxidisable substance and manganese ions, hypochlorite is added so that the oxidation-reduction potential in the reaction tank is 600 mV and higher, preferably 700 to 900 mV. If the oxidation-reduction potential is lower than this range, the oxidation of manganese ions is insufficient, and if it is higher than this range, the addition of hypochlorite becomes excessive, so that the consumption of chemicals increases undesirably.

Next, the reaction liquid of the reaction tank is introduced into a neutralisation tank. In the neutralisation tank, an alkaline agent is added so that the pH value is 7 to 9.5. As the alkaline agent, sodium hydroxide, calcium hydroxide, potassium hydroxide, or the like can be used. Of these compounds, calcium hydroxide increases the quantity of sludge, and potassium hydroxide is expensive, causing a poor economy. Therefore, considering economical efficiency and convenience in handling, sodium hydroxide is preferable.

In the neutralisation tank, manganese ions are turned into manganese dioxide by the alkaline agent, and the manganese dioxide deposits as a soluble solid content. However, since the pH value is adjusted to 7 to 9.5 in the neutralisation tank, magnesium hydroxide does not deposit.

Next, the reaction liquid of the neutralisation tank is introduced into a solid-liquid separator. As solid-liquid separation means, a conventional coagulative precipitation method can be used. In this case, a high molecular coagulant is preferably added to the reaction liquid at the outlet of the neutralisation tank (not shown) to facilitate the formation and precipitation of coagulated flocks. A supernatant liquid of the precipitation tank is discharged to the outside of the system as treated water, and precipitated solid substances including manganese dioxide are discharged as sludge.

In some cases, unreacted hypochlorite remains in the treated water. Therefore, sulphite or bisulphite is preferably added to the treated water to remove residual chlorine.

The method shown in FIG. 1 can be applied to the case of desulphurisation waste water in which the concentration of heavy metals other than manganese poses no problem. The characters of ORP in the figure denote means for measuring oxidation-reduction potential, and pH denotes means for measuring pH value.

FIG. 2 shows another example for carrying out the first aspect of the present invention.

In this method, hypochlorite is first added to waste water having been introduced into a reaction tank and the waste water is mixed. In this case as well, as in the method shown in FIG. 1, hypochlorite is added so that the oxidation-reduction potential in the reaction tank is 600 mV and higher, preferably 700 to 900 mV.

Next, the reaction liquid of the reaction tank is introduced into a neutralisation tank. At this time, after an alkaline agent is poured into an introduction pipe leading from the reaction tank to the neutralisation tank, sulphite or bisulphite is put into the neutralisation tank. Thereby, manganese ions are turned into manganese dioxide and are made insoluble, and at the same time, excessive hypochlorite is reduced.

The quantity of the added alkaline agent is adjusted so that the pH value in the neutralisation tank is 7 to 9.5. In this case, magnesium hydroxide does not deposit.

Also, sulphite or bisulphite is added so that the oxidation-reduction potential in the neutralisation tank is 200 mV and higher, preferably 300 to 400 mV. If the oxidation-reduction potential is lower than this range, insolubilized manganese dioxide dissolves again. Further, undesirably, not only the consumption of chemicals increases, but also excessive sulphurous acid ions are detected as COD.

The liquid in the neutralisation tank can be agitated by air. Thereby, excessive sulphurous acid ions are oxidised by the supplied air, and are turned into sulphate ions.

Further, if the oxidation-reduction potential is higher than this range, unreacted hypochlorite (residual chlorine) sometimes remains, and undesirably exerts an influence on a subsequent treatment process (for example, performance in removing heavy metals other than manganese, separation membrane used in the solid-liquid separation method, ion exchange resin for removing fluorine, and durability of activated charcoal for removing COD).

As sulphite or bisulphite, not only sodium sulphite, sodium bisulphite, or the like, but also combustion flue gas from which dust containing sulphur oxide has been removed can be used. However, sodium sulphite or sodium bisulphite is preferable.

Next, the reaction liquid of the neutralisation tank is introduced into a solid-liquid separation tank. At this time, a heavy metal chelating agent is added in a pipe leading from the neutralisation tank to the solid-liquid separation tank or in the solid-liquid separation tank. Thereby, heavy metals other than manganese can be deposited as solid content. If unreacted hypochlorite remains, the capability of removing heavy metals by using the heavy metal chelating agent is inhibited. Therefore, it is indispensable to remove excessive hypochlorite in the preceding neutralisation tank.

As solid-liquid separation means, a membrane separation method can be used in addition to the conventional coagulative precipitation method. In the coagulative precipitation method, a high molecular coagulant is preferably added to the reaction liquid at the outlet of the neutralisation tank (not shown) to facilitate the formation and precipitation of coagulated flocks. A supernatant liquid of the precipitation tank is discharged to the outside of the system as treated water, and precipitated solid substances including manganese dioxide and heavy metals are discharged as sludge.

When the membrane separation is used as the solid-liquid separation method, deterioration in membrane must sometimes be prevented. Therefore, unreacted hypochlorite is preferably removed in the preceding neutralisation tank.

As a separation membrane, a tubular type or submerged type microfiltration (MF) membrane can be used.

When the membrane separation is used, membrane permeating liquid is discharged to the outside of the system as treated water, and solid substances including concentrated manganese dioxide and heavy metals are discharged as sludge.

The method shown in FIG. 2 can be applied to the case of desulphurisation waste water in which heavy metals other than manganese, especially cadmium, coexist.

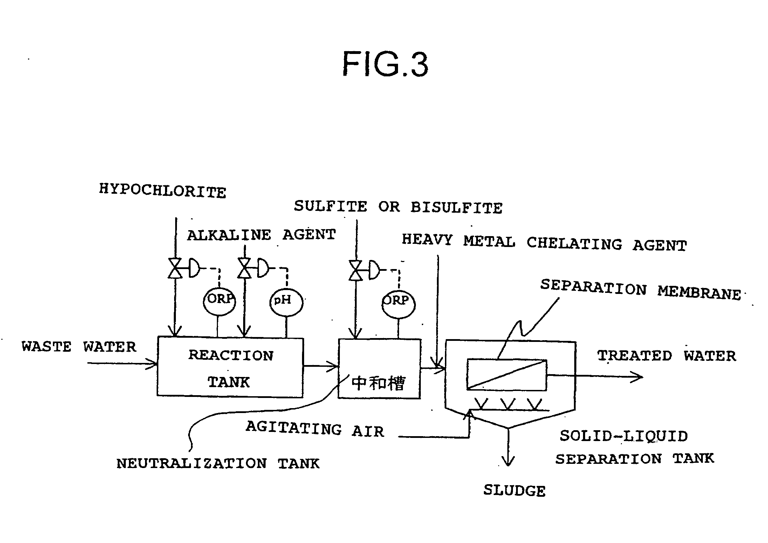

FIG. 3 shows still another example for carrying out a method in accordance with the present invention.

In this method, hypochlorite is first added to waste water having been introduced into a reaction tank and the waste water is mixed. In this case as well, as in the methods shown in FIGS. 1 and 2, hypochlorite is added so that the oxidation-reduction potential in the reaction tank is 600 mV and higher, preferably 700 to 900 mV. Further, an alkaline agent is poured so that the pH value in the reaction tank is adjusted to 7 to 9.5. Thereby, manganese ions in the desulphurisation waste water are turned into manganese dioxide and are deposited. As in the case shown in FIGS. 1 and 2, magnesium hydroxide does not deposit.

Next, the reaction liquid of the reaction tank is introduced into a neutralisation tank. In the neutralisation tank, sulphite or bisulphite is added so that the oxidation-reduction potential in the neutralisation tank is 200 mV and higher, preferably 300 to 400 mV. If the oxidation-reduction potential is in this range, manganese dioxide does not turn into manganese ions by means of re-dissolution.

Further, the reaction liquid of the neutralisation tank is introduced into a solid-liquid separation tank. At this time, a heavy metal chelating agent is added in a pipe leading from the neutralisation tank to the solid-liquid separation tank or in the solid-liquid separation tank. Thereby, heavy metals other than manganese can be insolubilized as solid content.

When a submerged type microfiltration (MF) membrane separation method is used as a solid-liquid separation method, agitating air is supplied from under a separation membrane to produce a water flow in the solid-liquid separation tank in order to prevent the separation membrane from clogging. At this time, oxygen dissolves. When sulphite having been added in the preceding neutralisation tank remains in a minute amount, therefore, sulphurous acid ions are favourably oxidised into sulphate ions. Membrane permeating liquid is discharged to the outside of the system as treated water, and solid substances including concentrated manganese dioxide and heavy metals are discharged as sludge.

The method shown in FIG. 3, like the method in FIG. 2, can be applied to the case of desulphurisation waste water in which heavy metals other than manganese, especially cadmium, coexist.

According to the present invention as described above, manganese ions and heavy metals in the desulphurisation waster water can be removed easily and efficiently in a region ranging from neutrality to weak alkalinity.

Also, a low and steady concentration of manganese in treated water can be obtained. Since magnesium ions in the desulphurisation waste water do not deposit as magnesium hydroxide, a smaller amount of sludge is produced.

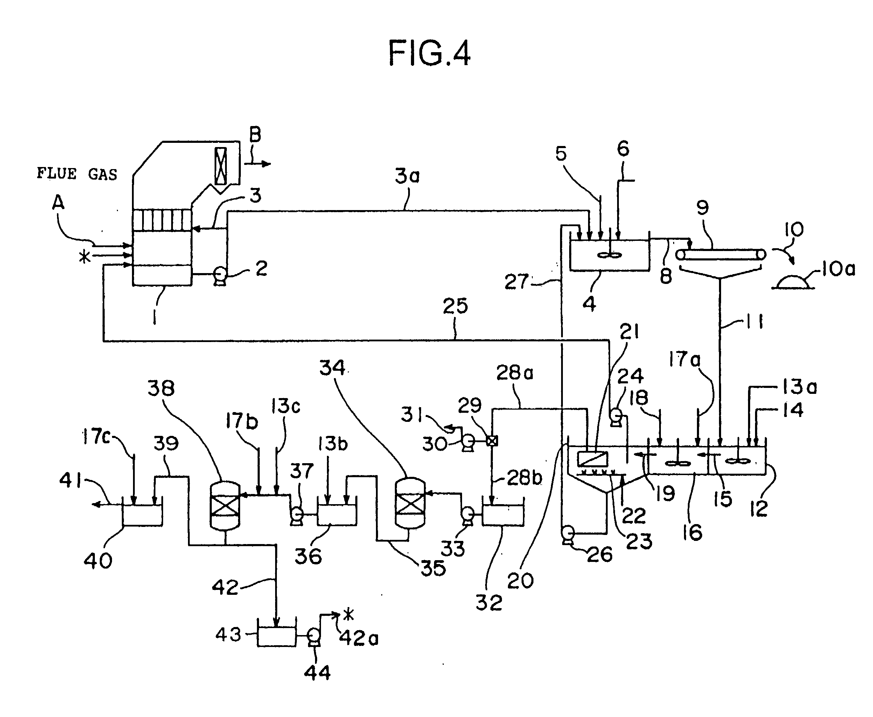

FIG. 4 shows an example of a system capable of carrying out a method in accordance with the with the aforesaid second aspect.

In FIG. 4, waste water containing heavy metals, which is discharged from a desulphuriser 1 is first sent to a mixing process (mixing tank 4). The principal ingredient of absorbent slurry 3a discharged from a desulphurisation process (desulphuriser 1) is gypsum. The absorbent slurry 3a contains 20 to 30wt% of gypsum with respect to water, and in addition, contains heavy metals as a very minute amount of component. The weight percentage of heavy metals varies according to the components, properties and the like of fuel, so that it cannot be specified generally.

In FIG. 4, after the desulphurisation process, the mixing process in which a chelating agent is added, a gypsum separation process (solid content separation), a filtrate treatment process (oxidation process, membrane separation process), an activated charcoal adsorption process, and a fluorine adsorption process are carried out in this order.

(1) Mixing process

The mixing process is a process in which a chelating agent for collecting heavy metals, a coagulation assistant, and permanganate as necessary, are added to absorbent slurry to coagulate and deposit solid substances including heavy metals.

As the chelating agent for collecting heavy metals, high molecular heavy metal collectors of liquid having a chelate formation group such as dithiocarbamic acid group ($-NH-CS_2Na$) and thiol group ($-SNa$) can be cited. The heavy metals in question are, although not subject to any special restriction, heavy metals such as Cd, Se and Hg. By adding the chelating agent for collecting heavy metals, microflocks having collected heavy metals are yielded.

The quantity of heavy metal chelating agent added in the mixing process is determined appropriately according to the quantity of heavy metals in the absorbent and other factors. Usually, the heavy metal chelating agent of 5 mg/litre and more, preferably 10 to 30 mg/litre, is added to the absorbent slurry.

The coagulation assistant is a chemical that is added as necessary to make the flocks of collected heavy metal chelate large or to solidify unreacted heavy metal chelating agent. As the coagulation assistant, ferric chloride, ferric sulphate, or the like is used. Although the quantity of added coagulation assistant is not specified generally because the necessity of adding coagulation assistant is determined by the components and properties of fuel, the coagulation assistant of 10 to 200 mg/litre, preferably 50 to 100 mg/litre, is usually added to the absorbent. This addition effects the formation of coarse flocks, resulting in improved separation property. The solid substances in mixed liquid, including these flocks, are separated by a gypsum separator 9 and are mixed in gypsum cake.

(2) Gypsum separation process

The heavy metals coagulated before the removal of gypsum by the addition of the chelating agent and coagulation assistant in the above-described mixing process are mixed in gypsum cake and separated simultaneously with the gypsum separation. That is to say, the chelated heavy metals are separated and removed as impurities in gypsum.

Since heavy metals etc. in filtrate 11 coming from the gypsum separation process have been removed, the treatment in the subsequent processes is easy even when some of the filtrate is extracted later as waste liquid.

Specifically, the aforementioned heavy metal chelating agent or the like is added to the absorbent slurry drawn from the desulphuriser to effect gypsum separation. After all of the filtrate after gypsum separation is subjected to COD treatment, some of the filtrate is subjected to separation membrane treatment, and treated water is subjected to post-treatment such as activated charcoal treatment as waste water. Therefore, in the gypsum process, polluting substances such as heavy metals are removed and membrane separation liquid is extracted as waste water separately from concentrate, so that sludge is hardly produced in the post-treatment.

Also, some substances contained in the absorbent slurry change into a compound that is difficult to recover subsequently after an oxidising agent has been added in the oxidation process. After heavy metals and the like are separated in gypsum by adding an chelating agent or the like before the gypsum separation, even if the filtrate undergoes the COD treatment (oxidation process), the compound that is difficult to recover and separate is prevented from being yielded, and it can be removed by the gypsum separation before the oxidation.

The gypsum obtained by the gypsum separator contains impurities such as heavy metals etc. turned into solid content, but the impurities have no problem concerning the purity of gypsum cake.

(3) Filtrate treatment process

The filtrate treatment process consists of an oxidation process and a membrane separation process, and a neutralisation process is added to this filtrate treatment process as necessary.

Heavy metals including manganese are removed by being mixed in gypsum in the gypsum separation process as described above, and then dehydration and filtration are effected. Since difficult-to-decompose COD components, fluorine, and the like are contained in the filtrate coming from the gypsum separator, these compounds in the filtrate 11 are treated.

For example, the filtrate treatment process is carried out by a system in which an oxidation tank (oxidation reaction), a neutralisation tank (neutralisation reaction), and a separation membrane are arranged in succession.

In the oxidation tank (oxidation reaction) and the neutralisation tank (neutralisation reaction), hypochlorite is first added to decompose the difficult-to-decompose COD components (oxidation tank). Then, residual chlorine is reduced by a reducing agent (neutralisation tank). Thereupon, slightly excessive reducing agent remains, so that the reducing agent is oxidised by air to provide a treated liquid with no problem.

Oxidation process and neutralisation process

In the oxidation process (COD decomposition process), an oxidising agent is added to waste water to decompose nitrogen-sulphur compounds, which are COD components in waste water. Thereafter, in the neutralisation process, the filtrate is adjusted from neutrality to weak alkalinity by alkali, and the reducing agent is further added as necessary, by which excessive oxidising agent is decomposed and removed.

The filtrate 11 coming from the above-described gypsum separation process is sent to the oxidation process. This filtrate contains N-S compounds (inorganic COD components) mainly having the following composition yielded by the reaction of SO2 with NOx in the desulphuriser and manganese ions.

| | |
|---|---|
| hydroxyaminemonosulphonate | $HONHSO_3^-$ |
| hydroxyaminedisulphonate | $HON(SO_3)_2^{2-}$ |
| hydroxyaminetrisulphonate | $ON(SO_3)_3^{3-}$ |

Acid 13a such as hydrochloric acid or sulphuric acid is added to the filtrate, and the pH value is adjusted to 4 and lower, preferably about 3 to 4 to save waste usage of chemicals. Thus, the quantity of added acid is determined appropriately so that the pH value is within this range. As the added acid 13a, hydrochloric acid is preferably used from the viewpoint of the prevention of scaling.

Subsequently, a predetermined amount of oxidising agent such as hypochlorite is added based on the oxidation-reduction potential of waste water to decompose the difficult-to-decompose COD components (N-S compounds). As the oxidising agent, hypochlorite, chlorine dioxide solution, or the like can be used. Of these compounds, sodium hypochlorite (NaOCl) is preferable from the viewpoints of treatment ability and economy. One example of reaction formula (1) at this time is given below.

$$6ON(SO_3)_3{}^{3-} + 18ClO^- + 10H_2O$$

$$\rightarrow 4NO + 2NO_3{}^- + 18HSO_4{}^- + 18Cl^- + 2H^+ + 3O_2 \qquad\qquad (1)$$

The amount of added hypochlorite is usually about 2 to 8 moles, preferably about 3 to 5 moles, on a mole basis with respect to one mole of N-S compounds. In this reaction, the temperature is preferably 40°C and higher, and the residence time is preferably 2 hours and longer. Also, in this process, manganese ions (bivalent) contained in the filtrate 11 coming from the gypsum separation process are not oxidised and are still kept in a dissolved state.

In the neutralisation process, the pH value of the filtrate containing the oxidising agent added in the oxidation process is first adjusted to 7 to 8. At this time, manganese ions (bivalent) is oxidised and deposited as manganese dioxide (quadrivalent).

Further, in order to treat the residual chlorine, a reducing agent is added to effect neutralisation. After the N-S compounds are decomposed, it is preferable that any reducing agent of sodium sulphite ($Na_2SO_3$), sodium hydrogen sulphite ($NaHSO_3$), sodium thiosulphate ($Na_2S_2O_3$), and the like with an equivalent almost equal to that of the residual oxidising agent detected by the oxidation-reduction potential of waste water be added to decompose excessive oxidising agent such as sodium hypochlorite.

Also, as an alkali added in the neutralisation process, for example, sodium hydroxide or potassium hydroxide can be used.

Membrane separation process

For the liquid having undergone the treatment in the above-described oxidation process and neutralisation process, most of the treated liquid is returned to the desulphurisation process as concentrate 25 to be reused. Specifically, at the final stage of the filtrate treatment process, SS components are first removed by membrane separation, and the removed SS components are returned again to the desulphurisation process as the concentrate 25. The concentrate returned from a membrane separation tank to the desulphuriser through a concentration pump is about 70wt% of the filtrate 11 coming from the gypsum separation process.

On the other hand, a necessary amount of membrane filtrate 28a separated in the membrane separation process is sent to the subsequent waste water treatment process. In the waste water treatment, activated charcoal adsorption is effected in an activated charcoal adsorption tower 34 to treat organic COD components contained in the membrane filtrate 28a, and then fluorine adsorption treatment using a fluorine adsorption resin is effected in a fluorine adsorption tower 38. Thereby, the filtrate is discharged as purified treated water.

As a separation membrane 21, for example, a tubular type microfiltration membrane, a submerged type flat-plate microfiltration membrane, and a submerged type hollow-fibre microfiltration membrane can be cited, and any type of membrane can be used. For example, in the case of the submerged type hollow-fibre microfiltration membrane, if slightly decompressed filtrate is caused to pass through a hollow tube in the membrane, solid content adheres to the surface, and only water content flows inside and is separated. The separation membranes are arranged at the slightly upper part in the vicinity of the centre of a membrane separation tank 20. If the separation membrane is contaminated, it is washed appropriately. The separation membrane is in a state such as to be always vibrated by the liquid flow caused by air blown from an air-diffusing pipe located under the separation membrane. The quantity of air is usually in the range of 0.1 to 0.4 $m^3$/h per one air-diffusing pipe.

The adhesion of solid content to the membrane surface is prevented by the vibration of membrane caused by bubbling. Some of the solid content floats and the remainder precipitates at the bottom of the membrane separation tank 20. The precipitate can be returned to the mixing tank 4 before the gypsum separation as necessary by a precipitate pump 26. This precipitate contains deposited manganese dioxide, which is mixed in gypsum and separated simultaneously with the gypsum separation.

The reason for separating filtrate by the separation membrane is that solid content is prevented from being sent to the waste water treatment process, and therefore solid content is removed by the solid-liquid separation. The solid-liquid separation is effected by using the separation membrane, so that a filtration process (sand filtration etc.) need not be provided before the activated charcoal adsorption tower.

(4) Activated charcoal adsorption process

The activated charcoal adsorption process is a process in which the membrane filtrate 28a having undergone the membrane separation process is brought into contact with activated charcoal as waste water to remove organic COD components by means of adsorption.

After being stored in a membrane filtrate tank 32, the membrane filtrate 28a is introduced into the activated charcoal adsorption tank 34 by using a pump 33. The membrane filtrate 28a is caused to pass through a granulated activated charcoal layer in the activated charcoal adsorption tower 34, by which organic COD components mainly caused by industrial water are removed by means of adsorption.

The waste water from which organic COD components have been removed is introduced to the fluorine adsorption process and is treated. The activated charcoal having been clogged with impurities after water has been caused to pass through for a certain period of time is back washed by water, by which the impurities can be removed.

(5) Fluorine adsorption process

The fluorine adsorption process is a process in which the waste water having been treated in the activated charcoal adsorption process is brought into contact with a fluorine adsorption resin to remove the remaining fluorine by means of adsorption, and thereafter the pH value of the waste water is adjusted by an alkaline agent.

In the fluorine adsorption process, after the pH value of waste water is adjusted to about 2 to 4 by using mineral acid such as hydrochloric acid, the waste water whose pH value has been adjusted is caused to pass through a fluorine adsorption resin layer in the fluorine adsorption tower, by which minute amounts of fluorine ions remaining in the liquid are removed by means of adsorption. For the fluorine adsorption resin, various types are available in terms of functional group and carrier metal. Concretely, phosphomethylamino group chelate resin, zirconium carrier type resin, caesium carrier type resin, and the like are cited. Of these resins, zirconium carrier type resin and caesium carrier type resin are preferably used.

Of these resins, for example, the caesium carrier type resin reacts with fluorine ion as described below.

$$[\text{Adsorption reaction}]\ Ce\cdots OH^- + F^- \rightarrow Ce\cdots F^- + OH^-$$

The adsorption resin whose fluorine adsorbing capability has decreased after water has been caused to pass through for a certain period of time is recycled by the reaction with an alkaline agent such as sodium hydroxide as described below, and thereafter is washed by mineral acid such as hydrochloric acid and water, whereby the adsorption resin can be recycled.

$$[\text{Recycling reaction}]\ Ce\cdots F^- + NaOH \rightarrow Ce\cdots OH^- + NaF$$

Recycled waste liquid 42 discharged at this time can be returned from a recycled waste liquid tank 43 to the desulphuriser 1. In this case, fluorine ions in the recycled waste liquid are collected by large amounts of calcium ions in the desulphuriser. The fluorine ions are fixed as calcium fluoride, and are discharged by being contained in the yielded gypsum ($CaSO_4$). In particular, this recycled waste liquid 42 contains excessive NaOH, which gives a favourable influence to the desulphurisation performance of the desulphuriser.

On the other hand, for fluorine treated water 39 from which fluorine ions have been removed by means of adsorption, the pH value is adjusted to about 6 to 8 by using an alkaline agent such as sodium hydroxide. Thereafter, the fluorine treated water 39 is discharged or recycled.

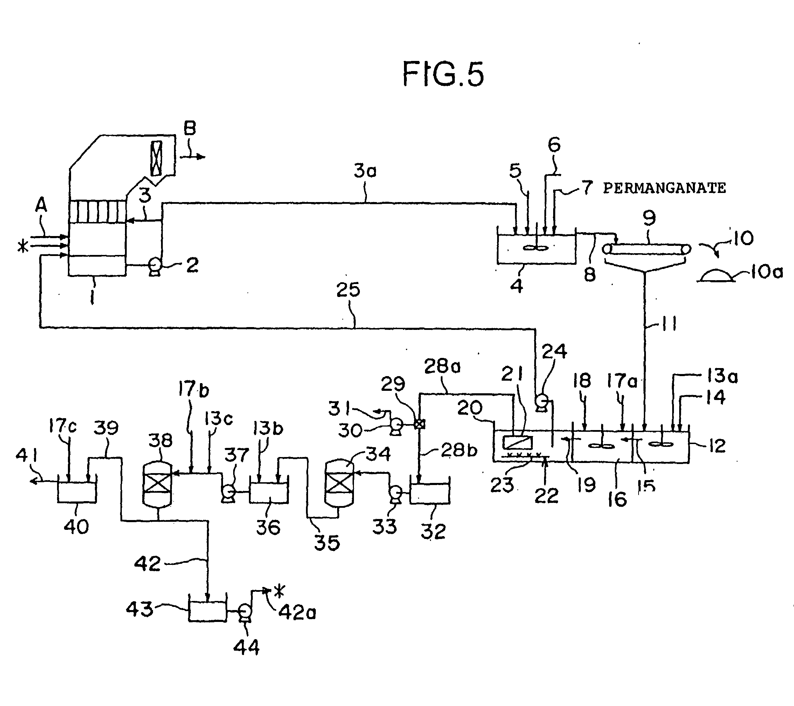

FIG. 5 shows a system using a method in accordance with the aforesaid second aspect. Here a fixing substance such as permanganate 7 is also added to the absorbent slurry in the mixing tank 4. Usually, manganese and the like are present in the absorbent liquid, and for example, manganese is a substance subject to regulation.

Therefore, the absorbent liquid cannot be discharged without treatment.

Conventionally, therefore, there has been used a method in which the absorbent slurry is sedimented in a form of hydroxide by increasing the pH value to 10 and higher, by which the absorbent slurry is separated. In this method, however, magnesium contained in the desulphurisation waste water is also deposited undesirably as magnesium hydroxide. Therefore, to prevent the coprecipitation of magnesium, manganese is preferably separated and removed after being changed into a form of manganese dioxide in removing manganese ions. For this purpose, permanganate is added.

By adding permanganate 7 in the mixing tank 4 as described above, manganese in the absorbent slurry is separated into gypsum and removed in the gypsum separation process.

Generally, manganese has a smaller affinity force with a heavy metal chelating agent than other heavy metals, so that other heavy metals deposit earlier as solid content. Therefore, in some cases, it is difficult to remove manganese by a heavy metal chelating agent only. For this reason, for manganese ions (bivalent) with a low efficiency of removal using a chelating agent (capability in changing into solid content), it is effective to add a particular fixing substance (for example, permanganate). In this case, it is preferable to add permanganate in the vicinity of almost neutral pH value.

As permanganate, potassium permanganate, for example, can be cited.

When permanganate is used as described above, permanganate is added so that the quantity thereof is usually 1 to 5 times, preferably 1.5 to 3 times, the quantity of manganese ions (bivalent) in the absorbent slurry by weight ratio. The reaction when permanganate is added takes place as expressed by the following reaction formula.

$$2KmnO_4 + 3Mn^{2+} + 4H_2O \rightarrow 5MnO_2 \cdot 2H_2O + 2K^+ + 4H^+$$

In a variation, the above-described membrane separation tank is provided in an absorption tower of the desulphuriser 1 in a wet lime-gypsum process flue gas desulphurisation system in which sulphur oxide gas is absorbed and separated by using absorbent slurry. Also, when the neutralisation tank in which a reducing agent is added to treated liquid coming from the oxidation tank is provided between the oxidation tank and the membrane separation tank, the neutralisation tank is also provided in the absorption tower of the desulphuriser 1 in addition to the membrane separation tank.

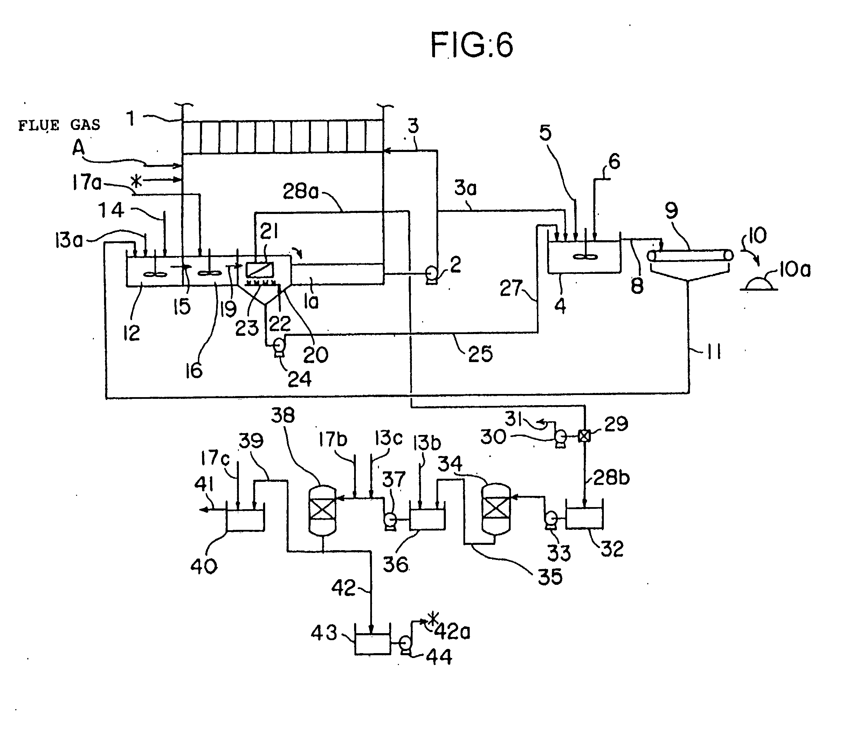

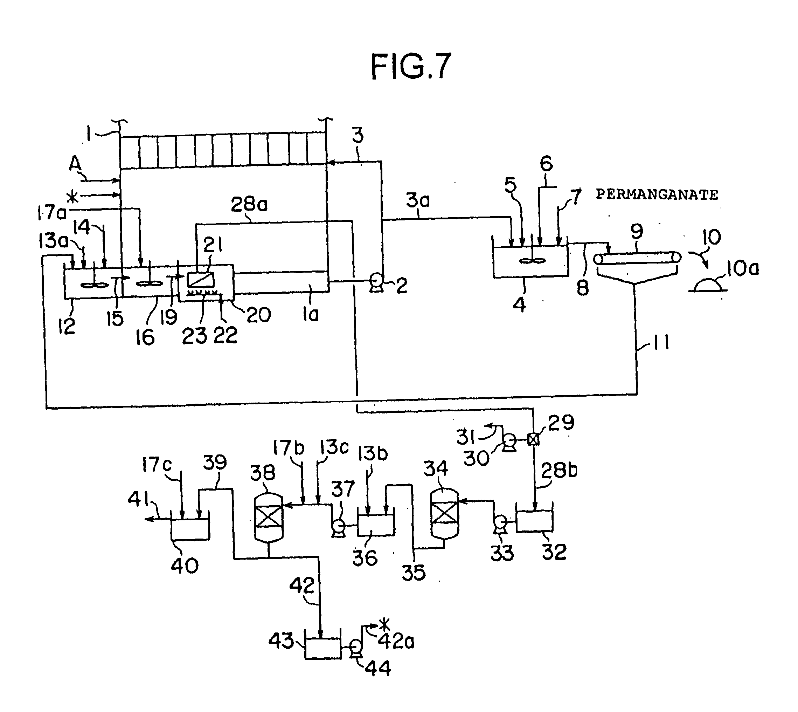

FIG. 6 shows the outline of a system in accordance with this variation, and FIG. 7 shows the outline of a system of a mode in which a fixing substance such as permanganate is further added.

The system in accordance with this variation is an integral type system of the filtrate treatment process and the desulphuriser 1, and the filtrate treatment process is incorporated in the desulphuriser. Therefore, this system is efficient because even if the concentrate 25 obtained by the membrane separation is not returned to the desulphuriser 1 through the pump, the concentrate 25 is gathered in an absorbent tank 1a in the desulphuriser as it is.

According to the aforesaid second aspect, in the treatment of absorbent in the flue gas desulphurisation system, the treatment efficiency in the desulphurisation process and waste water treatment process can be enhanced, and the quantity of sludge discharged by the treatment can be decreased.

Specifically, by effectively combining and integrating the desulphurisation process (desulphuriser) with the absorbent slurry treatment process (gypsum separation), the quantity of wastes in the whole system can be decreased, and the burden on the post-treatment process can be alleviated.

Also components of difficult-to-decompose COD components, heavy metals, fluorine, and the like can be removed efficiently and sufficiently from the absorbent slurry of the wet type flue gas desulphurisation system for coal burning flue gas, and also sludge can be prevented from being produced in the waste water treatment. Therefore, an efficient operation of the desulphuriser and treatment of waste water can be made easy.

Further, the resin recycled waste liquid in the fluorine treatment process for waste water treatment contains excessive NaOH with a high pH value. Therefore, by returning the recycled waste water to the desulphuriser, a favourable influence is given to the desulphurisation performance of the desulphuriser.

In the second aspect the desulphurisation waste water treatment process can be simplified, and also the quantity of deposited sludge is far smaller than the quantity of by-product gypsum, and sludge is hardly produced. Also, since no hydroxide is produced in the waste water treatment, the hydroxide need not be mixed with gypsum, so that the water content and purity of gypsum are not influenced adversely.

Further, by using the separation process using the separation membrane in place of the conventional coagulative separation process, sand filtration process, and the like, the treatment process can be simplified, and also the increased size of equipment and the necessity of a large-scale treatment facility can be avoided.

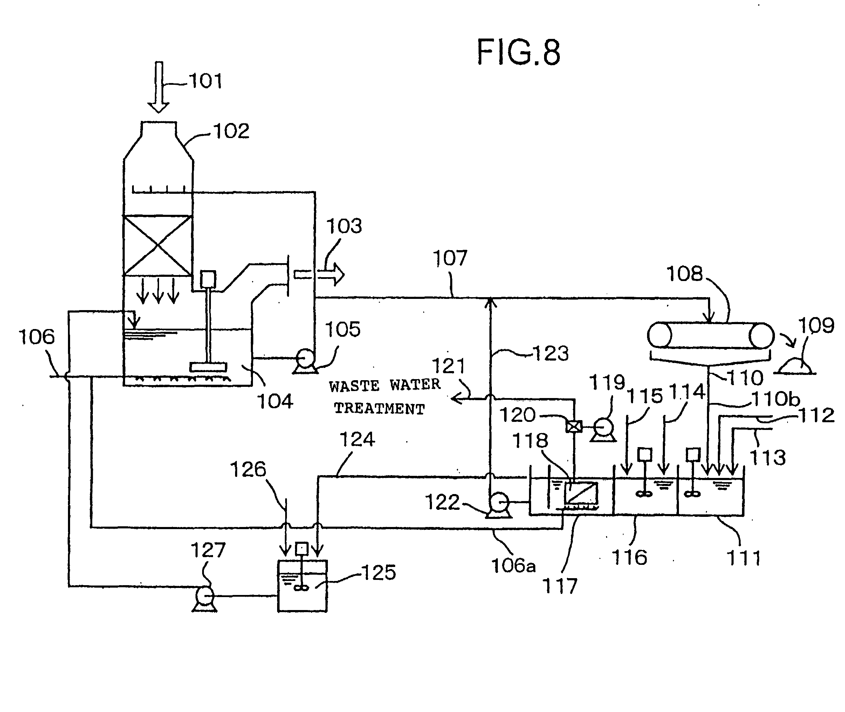

FIG. 8 shows an example of a system capable of carrying out a method in accordance with the aforesaid third aspect.

In FIG. 8, some of absorbent slurry containing heavy metals, which is discharged from an absorption tower 102, a part of a desulphuriser, is first extracted and sent to a gypsum separator 108. The principal ingredient of the absorbent slurry discharged from the desulphurisation process is gypsum, the absorbent slurry containing 20 to 30wt% of gypsum with respect to water. In addition, the absorbent slurry contains heavy metals as a very minute amount of component. The weight percentage of heavy metals varies according to the components, properties and the like of fuel, so that it cannot be specified generally.

In FIG. 8, after gypsum separation (solid content separation) is effected, the filtrate is treated in an oxidation process, a neutralisation process (neutralisation reaction), and a solid-liquid separation process in this order. This filtrate treatment process is carried out by a treatment system equipped with an oxidation tank 111, a neutralisation tank 116, and a membrane separation tank 117 as shown in FIG. 8, for example.

The absorbent slurry containing heavy metals such as manganese as described above is first dehydrated and filtrated in the gypsum separation process. The filtrate coming from a gypsum separator contains heavy metals such as manganese, difficult-to-decompose COD components, and the like, so that these compounds in the filtrate 110 is treated.

Specifically, after the gypsum separation, an oxidising agent such as hypochlorite is added to the filtrate in the oxidation tank, and then the pH value of the filtrate is adjusted to 7 to 9.5 in the neutralisation tank. The filtrate whose pH value has been adjusted is subjected to solid-liquid separation by membrane separation or the like, by which heavy metals such as manganese contained in the filtrate are removed.

(i) Oxidation process

The filtrate 110 coming from the above-described gypsum separation process is sent to the oxidation process. This filtrate contains N-S compounds (inorganic COD components) mainly having the following composition yielded by the reaction of $SO_2$ with NOx in the desulphuriser.

| | |
|---|---|
| hydroxyaminemonosulphonate | $HONHSO_3^-$ |
| hydroxyaminedisulphonate | $HON(SO_3)_2^{2-}$ |
| hydroxyaminetrisulphonate | $ON(SO_3)_3^{3-}$ |

Acid 112 such as hydrochloric acid or sulphuric acid is added to the filtrate so that the pH value is adjusted to 3 to 4 to save wasteful usage of chemicals. Thus, the quantity of added acid is determined appropriately so that the pH value is within this range. As the added acid 112, hydrochloric acid is preferably used from the viewpoint of the prevention of scaling.

Subsequently, in the oxidation tank 111, an oxidising agent such as hypochlorite is added to decompose difficult-to-decompose COD components. As hypochlorite, sodium hypochlorite, bleaching powder, and the like can be used, and sodium hypochlorite (NaOCl) is preferably used from the viewpoint of handling.

At this time, it is preferable that the content of difficult-to-decompose COD components (N-S compounds) be determined based on the oxidation-reduction potential (ORP) of waste water, and an oxidising agent of a predetermined amount corresponding the above content be added to decompose the N-S compounds. The reaction taking place when sodium hypochlorite is used as the oxidising agent is expressed by the above-described reaction formula (1).

The quantity of added hypochlorite is usually about 2 to 8 moles, preferably about 3 to 5 moles, on a mole basis with respect to one mole of N-S compound. In this reaction, the temperature is preferably $40°C$ and higher, and the residence time is preferably 2 hours and longer.

On the other hand, the pH value of desulphurisation waste water is usually in an acidic region, and in the case where an oxidisable substance such as an organic substance is present in the waste water, when the waste water is mixed with hypochlorite, hypochlorite is consumed by the oxidation.

Therefore, in the oxidation process, as a necessity for oxidation of oxidisable substance and manganese ions, hypochlorite is added so that the oxidation-reduction potential in the oxidation tank is 600 mV and higher, preferably 700 to 900 mV. If the oxidation-reduction potential is lower than this range, the oxidation of manganese ions is insufficient, and if it is higher than this range, the addition of hypochlorite becomes excessive, so that the consumption of chemicals increases undesirably.

(ii) Neutralisation process

Next, the reaction liquid of the oxidation tank 111 is introduced into the neutralisation tank 116. In the neutralisation tank 116, an alkaline agent 114 is added so that the pH value is 7 to 9.5. As the alkaline agent, sodium hydroxide, calcium hydroxide, potassium hydroxide, or the like can be used. Of these compounds, calcium hydroxide increases the quantity of sludge, and potassium hydroxide is expensive, causing a poor economy. Therefore, considering economical efficiency and convenience in handling, sodium hydroxide is especially preferable.

In the neutralisation tank 116, manganese ions are turned into manganese dioxide by the alkaline agent, and the manganese dioxide deposits as a soluble solid content. However, since the pH value is adjusted to 7 to 9.5, magnesium hydroxide does not deposit.

Also, in some cases, unreacted hypochlorite remains in the reaction liquid of the oxidation tank. Therefore, a reducing agent 115 such as sulphite, sulphurous acid gas, or bisulphite is preferably added to remove residual chlorine.

Specifically, if the oxidation-reduction potential of waste water is not 200 mV and higher, preferably 300 to 400 mV, after the decomposition of N-S compounds, a reducing agent is added so that the oxidation-reduction potential is in this range, by which excessive oxidising agent such as hypochlorite is decomposed. If the oxidation-reduction potential is lower than this range, insolubilized manganese dioxide dissolves again easily. Further, undesirably, not only the consumption of chemicals increases, but also excessive reducing agent is detected as COD. As sulphite or bisulphite, not only sodium sulphite ($Na_2SO_3$), sodium bisulphite ($NaHSO_3$), sodium thiosulphate ($Na_2S_2O_3$), or the like, but also combustion flue gas from which dust containing sulphur oxide has been removed can be used.

(iii) Solid-liquid separation process

Next, the reaction liquid of the neutralisation tank 116 is introduced into the membrane separation tank 117. The solid-liquid separation method is not subject to any special restriction. For example, the membrane separation method or the coagulative precipitation method can be used, and the membrane separation method is preferably used. In the case of the coagulative precipitation method, a high molecular coagulant is preferably added to the reaction liquid at the outlet of the neutralisation tank 116 to facilitate the formation and precipitation of coagulated flocks.

In FIG. 8 the membrane separation method is used by the use of the membrane separation tank 117.

Some of the liquid having undergone the treatment in the above-described oxidation process and neutralisation process is returned to the preceding stage of the gypsum separator 108 as concentrate 123. The concentrate 123 returned from the membrane separation tank 117 to the preceding stage of the gypsum separator 108 through a concentrate pump 122 usually has a weight percentage of about 0.5 to 1wt% of the filtrate of the membrane separation tank. This precipitate contains deposited manganese dioxide, and is mixed in gypsum and separated simultaneously with the gypsum separation. Also, overflow water 124 coming from the membrane separation tank 117 is sent again to the absorption tower 102 through a limestone preparation tank 125.

On the other hand, a necessary amount of membrane filtrate separated in the membrane separation process is sent to the subsequent waste water treatment process. In the waste water treatment, for example, activated charcoal adsorption is effected in an activated charcoal adsorption tower to treat organic COD components contained in the membrane filtrate 121, and then fluorine adsorption treatment using a fluorine adsorption resin is effected as necessary. Thereby, the filtrate is discharged as purified treated water.

As a separation membrane 118, for example, a tubular type microfiltration membrane, a submerged type flat-plate microfiltration membrane, and a submerged type hollow-fibre microfiltration membrane can be cited, and any type of membrane can be used. For example, in the case of the submerged type hollow-fibre microfiltration membrane, if slightly decompressed filtrate is caused to pass through a hollow tube in the membrane, solid content adheres to the surface, and only water content flows inside and is separated. The separation membranes are arranged at the slightly upper part in the vicinity of the centre of a membrane separation tank 117. If the separation membrane is contaminated, it is washed appropriately. The separation membrane is in a state such as to be always vibrated by the liquid flow caused by air blown from an air-diffusing pipe located under the separation membrane. The quantity of air is usually in the range of 0.1 to 0.4 $m^3$/h per one air-diffusing pipe. Thereby, the adhesion of solid content to the membrane surface is prevented. Also, when sulphite having been added in the preceding neutralisation tank remains in a minute amount, sulphurous acid ions are favourably oxidised into sulphate ions by the air agitation.

Some of the solid content yielded by membrane filtration floats and the remainder precipitates at the bottom of the membrane separation tank 117. The precipitate can be returned to the preceding stage of the gypsum separator 108 through the concentrate pump 122 as the solid substance concentrate 123 as described above.

The reason for separating filtrate by the separation membrane 118 is that solid content is prevented from being sent to the waste water treatment process, and therefore solid content is removed by the solid-liquid separation. The solid-liquid separation is effected by using the separation membrane, so that a filtration process (sand filtration etc.) need not be provided before the activated charcoal adsorption tower.

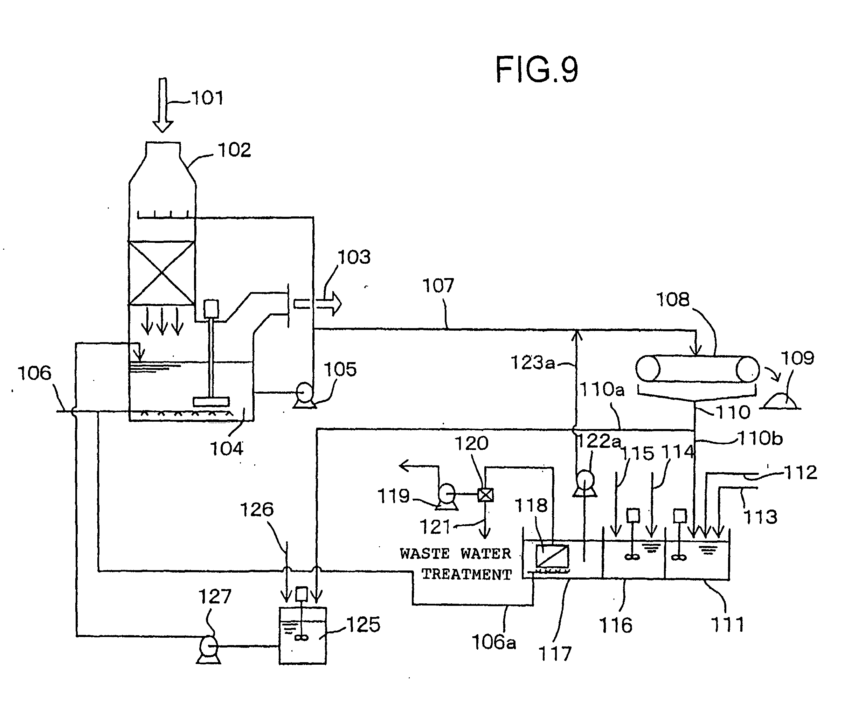

FIG. 9 shows an example of another system for carrying out the aforesaid third aspect.

In the system shown in FIG. 9, some of absorbent slurry containing heavy metals, which is discharged from the absorption tower 102, a part of the desulphuriser, is extracted and sent to the gypsum separator 108 as in the case of the above-described system (No. 4). Of the filtrate 110 having undergone the gypsum separation (solid content separation), some filtrate 110b is treated in the oxidation process, the neutralisation process (neutralisation reaction), and the solid-liquid separation process in this order. This treatment process of the filtrate 110b is carried out by a treatment system equipped with the oxidation tank 111, the neutralisation tank 116, and the membrane separation tank 117 as shown in FIG. 9.

The filtrate 110b can be treated in the oxidation process, the neutralisation process, and the solid-liquid separation process, which are the same as those in the above-described system (No. 4). Specifically, after an oxidising agent such as hypochlorite is added to the filtrate 110b in the oxidation tank, the pH value of the filtrate is adjusted to 7 to 9.5 in the neutralisation tank. The filtrate whose pH value has been adjusted is subjected to solid-liquid separation by membrane separation or the like. Thereby, heavy metals such as manganese contained in the filtrate 110b are removed, and also difficult-to-decompose COD components are decomposed and removed.

On the other hand, other filtrate 110a is introduced into the limestone preparation tank 125, and then is returned to the absorption tower 102. Therefore, in this system, overflow water is not taken out of the membrane separation tank 117 to be introduced into the tank 125. Solid substance concentrate 123a is introduced from the membrane separation tank 117 to the preceding stage of the gypsum separator 108, and the membrane filtrate 121 is discharged to waste water treatment.

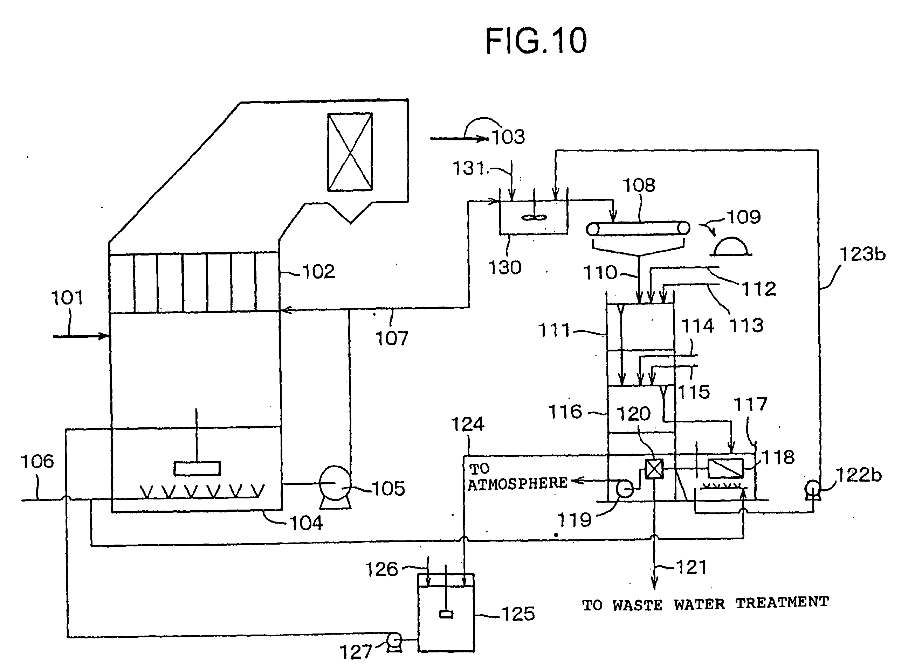

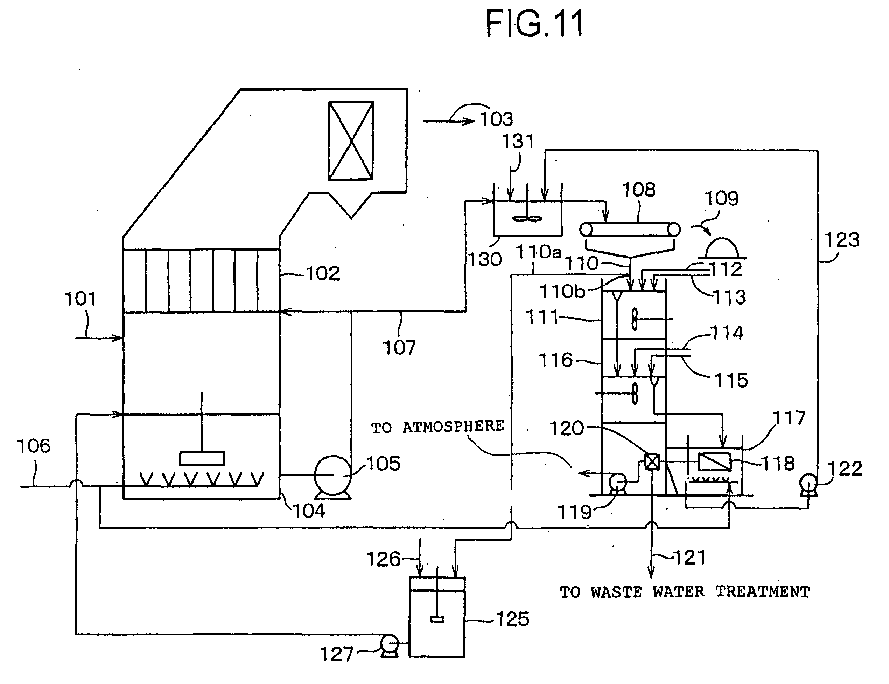

FIGS. 10 and 11 show an example of still another system for carrying out the aforesaid third aspect.

In the system of FIG. 10, some of absorbent slurry discharged from the absorption tower 102, a part of the desulphuriser, is extracted and sent to the gypsum separator 108. In this system, there is provided a mixing tank 130 in which a heavy metal chelating agent 131 or the like is added to and mixed with the absorbent slurry. After undergoing this mixing process, the absorbent slurry is sent to the gypsum separator 108.

Specifically, the waste water containing heavy metals, which is discharged from the absorption tower 102, is first sent to the mixing tank 130. The principal ingredient of absorbent slurry discharged from the desulphurisation process (desulphuriser) is gypsum, the absorbent slurry containing 20 to 30wt% of gypsum with respect to water. In addition, the absorbent slurry contains heavy metals as a very minute amount of component. The weight percentage of heavy metals in waste water varies according to the components, properties and the like of fuel, so that it cannot be specified generally.

To remove such heavy metals from the waste water, after undergoing the mixing process, the absorbent slurry is treated in the gypsum separation process, the oxidation process, the neutralisation process, and the membrane separation process in this order.

The above-described mixing process is a process in which a chelating agent for collecting heavy metals, a coagulation assistant, and permanganate as necessary, are added to absorbent slurry to coagulate and deposit solid substances including heavy metals.

As the chelating agent for collecting heavy metals, high molecular heavy metal collectors of liquid having a chelate formation group such as dithiocarbamic acid group ($-NH-CS_2Na$) and thiol group ($-SNa$) can be cited. The heavy metals in question are, although not subject to any special restriction, heavy metals such as Cd, Se and Hg. By usually adding 10 to 100 mg/L of chelating agent for collecting heavy metals, microflocks having collected heavy metals are yielded.

The quantity of heavy metal chelating agent added in this process is determined appropriately according to the quantity of heavy metals in the absorbent and other factors. Usually, the heavy metal chelating agent of 5 mg/litre and more, preferably 10 to 30 mg/litre, is added to the absorbent slurry.

The coagulation assistant is a chemical that is added as necessary to make the flocks of collected heavy metal chelate large or to solidify unreacted heavy metal chelating agent. As the coagulation assistant, ferric chloride, ferric sulphate, or the like is used. Although the quantity of added coagulation assistant is not specified generally because the necessity of adding coagulation assistant is determined by the components and properties of fuel, the coagulation assistant of 10 to 200 mg/litre, preferably 50 to 100 mg/litre, is usually added to the absorbent. This addition effects the formation of coarse flocks, resulting in improved separation property. The solid substances in mixed liquid, including these flocks, are separated by the gypsum separator 108 and are mixed in gypsum cake 109.

After the gypsum separator 108 in which gypsum is separated, there are provided the oxidation tank 111 (oxidation process) in which the pH value of all or some of filtrate from which gypsum has been separated is adjusted to 3 to 4 and an oxidising agent is added, the neutralisation tank 116 (neutralisation process) in which an alkaline agent is mixed in the liquid coming from the oxidation tank to adjust the pH value to 7 to 9.5, and the membrane separation tank 117 (solid-liquid separation process) in which the liquid coming from the neutralisation tank is subjected to solid-liquid separation by using a membrane. These oxidation tank, neutralisation tank, and membrane separation tank are arranged vertically as a unit under the gypsum separator so that the liquid flows down naturally from the gypsum separator to the oxidation tank, from the oxidation tank to the neutralisation tank, and from the neutralisation tank to the membrane separation tank in succession.

FIG. 10 shows a mode in which all of the filtrate from which gypsum has been separated is charged into the oxidation tank 111, and FIG. 11 shows a mode in which some of the filtrate from which gypsum has been separated is charged into the oxidation tank 111.

The filtrate 110, 110b charged into the oxidation tank 111 is treated in the oxidation process, neutralisation process, and solid-liquid separation process as in the case of the above-described system (No. 4). Specifically, after an oxidising agent such as hypochlorite is added to the filtrate in the oxidation tank, the pH value of the filtrate is adjusted to 7 to 9.5 in the neutralisation tank 116. The liquid whose pH value has been adjusted is subjected to solid-liquid separation by membrane separation or the like. Thereby, heavy metals such as manganese contained in the filtrate 110, 110b are removed, and also difficult-to-decompose COD components are decomposed and separated.

In the system shown in FIG. 10, overflow water is taken out of the membrane separation tank 117 and is introduced into the limestone preparation tank 125. Solid substance concentrate 123b is introduced from the membrane separation tank 117 to the mixing tank 130 at the preceding stage of the gypsum separator 108, and the membrane filtrate 121 is discharged to the waste water treatment.

On the other hand, the filtrate 110a in the system shown in FIG. 11 is introduced into the limestone preparation tank 125, and then is returned to the absorption tower 102. In the mode shown in FIG. 11, overflow water is not taken out of the membrane separation tank 117 to be introduced into the tank 125.

Since the oxidation tank 111, the neutralisation tank 116, and the membrane separation tank 117 are arranged vertically on the downstream side of the gypsum separator 108, the installation area of the unit is small, and the whole system is made compact. Also, the system can be operated efficiently because the liquid flows down naturally.

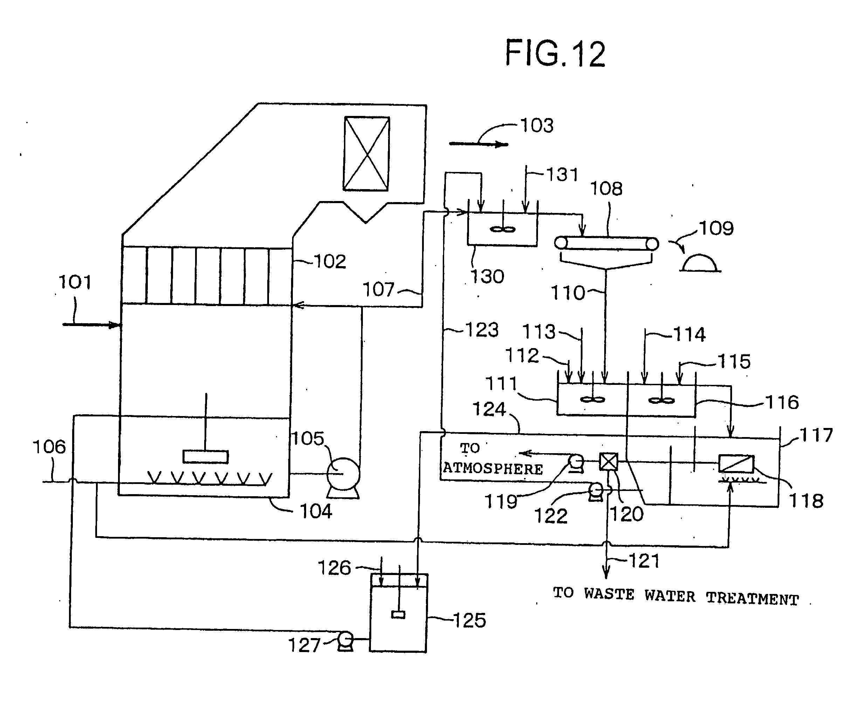

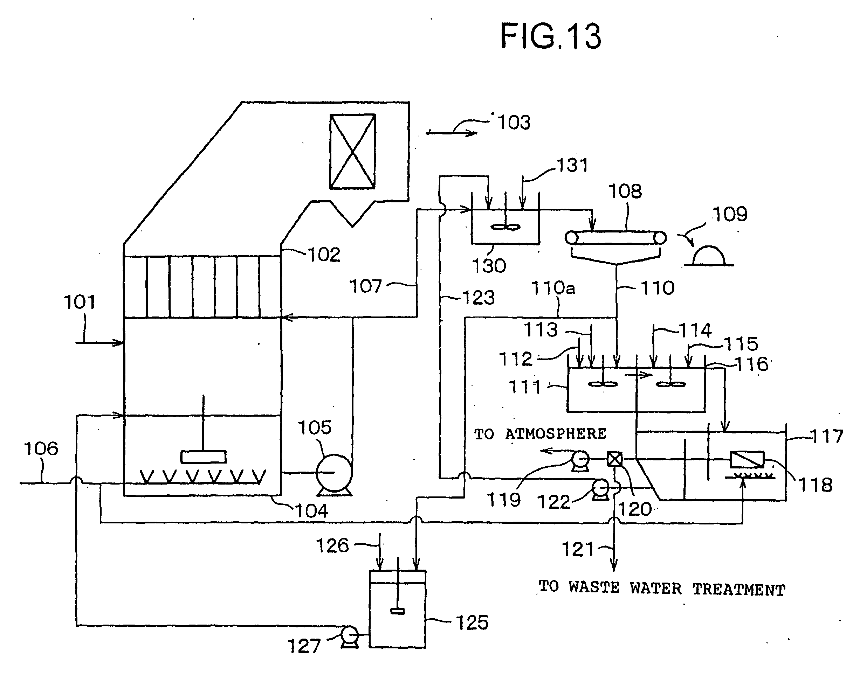

FIGS. 12 and 13 show an example of still another system for carrying out the aforesaid third aspect. As in the case of the above-described system (No. 6), there is provided the mixing tank 130 in which a heavy metal chelating agent 131 or the like is added to and mixed with the absorbent slurry. After undergoing this mixing process, the absorbent slurry is sent to the gypsum separator 108. After undergoing the gypsum separation process, the absorbent slurry is treated in the oxidation process, the neutralisation process, and the membrane separation process in this order.

After the gypsum separator 108, there are provided the oxidation tank 111 in which the pH value of all or some of filtrate from which gypsum has been separated is adjusted to 3 to 4 and an oxidising agent is added, the neutralisation tank 116 in which an alkaline agent is mixed in the liquid coming from the oxidation tank to adjust the pH value to 7 to 9.5, and the membrane separation tank 117 in which the liquid coming from the neutralisation tank is subjected to solid-liquid separation by using a membrane. These oxidation tank, neutralisation tank, and membrane separation tank are arranged vertically under the gypsum separator so that the liquid flows down naturally from the gypsum separator to the oxidation tank and from the neutralisation tank adjacent to the oxidation tank to the membrane separation tank in succession.

FIG. 12 shows a mode in which all of the filtrate from which gypsum has been separated is charged into the oxidation tank 111, and FIG. 13 shows a mode in which some of the filtrate from which gypsum has been separated is charged into the oxidation tank 111. The process in each tank is the same as that in the above-described system (No. 6).

In the system shown in FIG. 12, overflow water is taken out of the membrane separation tank 117 and is introduced into the limestone preparation tank 125. On the other hand, the solid substance concentrate 123 is introduced into the mixing tank 130 at the preceding stage of the gypsum separator 108, and the membrane filtrate 121 is discharged to the waste water treatment. Also, the filtrate 110a in the system shown in FIG. 13 is introduced into the limestone preparation tank 125, and then is returned to the absorption tower 102. In the mode shown in FIG. 13, overflow water is not taken out of the membrane separation tank 117 to be introduced into the tank 125.

Like the above-described system (No. 6), since the oxidation tank 111 and the membrane separation tank 117 are arranged vertically on the downstream side of the gypsum separator 108, the installation area of the unit is small, and the whole system is made compact. Also, the system can be operated efficiently because the liquid flows down naturally.

As described above, by removing N-S compounds having an influence on the desulphurisation performance, an adverse influence on the desulphurisation performance of the flue gas desulphurisation system can be avoided. Also, since the quantity of deposited sludge is far smaller than the quantity of by-product gypsum, and sludge is hardly produced, even if solid substance concentrate is sent again to the preceding stage of the gypsum separator, the water content and purity of gypsum are not influenced adversely.

Also, when sodium hypochlorite or the like is used as an oxidising agent, because it is an inexpensive chemical, the running cost is low.

Further, both of N-S compounds, which are difficult-to-decompose COD components, and manganese ions $Mn^{2+}$ can be treated efficiently at the same time, and the burden on the waster water treatment can be alleviated, so that the waste water treatment system can be simplified. As described above, waste water containing heavy metals, especially manganese, discharged from the wet type flue gas desulphuriser can be treated, so that the concentration of manganese in the treated water is low and stable.

The present invention will be described below in detail with reference to working examples. The present invention is not restricted by these working examples.

Working example 1

As waste water discharged from a desulphuriser for boiler combustion flue gas, desulphurisation waste water having water quality given in Table 1 below was treated by the flow shown in FIG. 1 under the treatment conditions given in Table 2. The quality of treated water and the quantity of produced sludge in this treatment are given in Table 2.

From Table 2, it can be seen that if the quantity of added chlorine was 50 mg/L and larger, the quantity of manganese ions $Mn^{2+}$ in the treated water was 10 mg/L and smaller.

Table 1

| pH | 5.9 |
|---|---|

Table 1   (continued)

| Mn$^{2+}$ | 40mg/L |
|---|---|
| Cd$^{2+}$ | 0.5mg/L |
| SO$_3^{2-}$ | < 5mg/L |
| ORP | 320mV |

Table 2

| Reaction tank | Added chlorine (mg/L) | 20 | 50 | 100 |
|---|---|---|---|---|
| | ORP (mV) | 450 | 600 | 780 |
| Neutralization tank | pH(-) | 8 | 8 | 8 |
| | ORP (mV) | 430 | 580 | 750 |
| | Residual chlorine (mg/L) | >0.05 | 12 | 17 |
| Treated water | Mn$^{2+}$(mg/L) | 30 | 8 | >1 |
| Quantity of sludge (mg/L):SS | | 10 | 45 | 60 |

Comparative example 1

The pH value of the desulphurisation waste water having the water quality given in Table 1 was adjusted to 11 by sodium hydroxide, and a supernatant liquid filtrated by a filter paper was made treated water. For this treated water, the quantity of manganese ions in the treated water was 3.8 mg/L, and the quantity of sludge produced in this treatment was about 12,000 mg/L.

Working example 2

As in the case of working example 1, desulphurisation waste water having water quality given in Table 1 was treated by the flow shown in FIG. 2 under the treatment conditions given in Table 3. The quality of treated water and the quantity of produced sludge in this treatment are given in Table 3.

From Table 3, it can be seen that the quantity of manganese ions in the treated water was 1 mg/L and smaller, but if residual chlorine was present in the neutralisation tank, cadmium was not removed at all, and under a treatment condition that residual chlorine was absent or sulphurous acid ions were excessive, cadmium was removed.

Table 3

| Reaction tank | Added chlorine (mg/L) | 100 | 100 | 100 |
|---|---|---|---|---|
| | ORP (mV) | 780 | 780 | 780 |
| Neutralization tank | pH(-) | 8 | 8 | 8 |
| | Added bisulfite (mg/L) | 0 | 50 | 100 |
| | ORP (mV) | 750 | 350 | 200 |
| | Residual chlorine (mg/L) | 17 | <0.05 | <0.05 |
| | Residual So$_3^{2-}$ (mg/L) | - | <1 | <1 |
| Added heavy metal chelating agent (mg/L) | | 30 | 30 | 30 |
| Treated water | Mn$^{2+}$ (mg/L) | <1 | <1 | <1 |
| | Cd$^{2+}$ (mg/L) | 0.5 | <0.1 | <0.1 |
| Quantity of sludge (mg/L) | | 65 | 65 | 65 |

Working example 3

As in the case of working example 1, desulphurisation waste water having water quality given in Table 1 was treated by the flow shown in FIG. 2 under the treatment conditions given in Table 4. The quality of treated water and the quantity of produced sludge in this treatment are given in Table 4.

Table 4

| Reaction tank | Added chlorine (mg/L) | 100 | 100 | 100 |
|---|---|---|---|---|
| | ORP (mV) | 750 | 750 | 750 |
| | pH(-) | 9 | 9 | 9 |
| Neutralization tank | Added bisulfite (mg/L) | 0 | 50 | 100 |
| | ORP (mV) | 750 | 350 | 170 |
| | Residual chlorine (mg/L) | 17 | <0.05 | <0.05 |
| | Residual $So_3^{2-}$ (mg/L) | - | < 1 | 7 |
| Added heavy metal chelating agent (mg/L) | | 30 | 30 | 30 |
| Treated water | $Mn^{2+}$ (mg/L) | <1 | <1 | 1.6 |
| | $Cd^{2+}$ (mg/L) | 0.5 | <0.1 | <0.1 |
| Quantity of sludge (mg/L) | | 70 | 70 | 70 |

From Table 4, it can be seen that when residual chlorine was present in the neutralisation tank (OPR 750 mV), the quantity of manganese ions in the treated water was 1 mg/L and smaller, but cadmium was not removed at all. When residual chlorine and sulphurous acid ions were not present (OPR 350 mV), the quantity of manganese ions in the treated water was 1 mg/L, and the quantity of cadmium was 0.1 mg/L. When sulphurous acid ions are excessive (OPR 170 mV), cadmium was removed to 0.1 mg/L. The quantity of manganese ions was 1.6 mg/L, but the treated water regulation value of 10 mg/L could be attained.

Working examples 4 and 5 and comparative example 2

In these working examples, flue gas of 200 $m^3N$/h taken out of a small-sized pulverised coal firing boiler (not shown) was treated by using the flue gas desulphurisation systems shown in FIGS. 8 and 10 (working example 4) and in FIGS. 9 and 11 (working example 5) after dust removal. Also, in comparative example 2, the addition of sodium hypochlorite was stopped in working example 4 in which the treatment system shown in FIGS. 8 and 10 was used.
Table 5 gives the properties of flue gas and slurry in the above-described flue gas treatment and measurement results in each tank.
From the results given in Table 5, it was found that when the pH value in the neutralisation tank is 7 and higher, the concentration of Mn in membrane filtrate satisfies the effluent standard of 100 ppm and less.

Table 5

| | Working example 4 | Working example 5 | Comparative example 2 |
|---|---|---|---|
| Treated flue gas concentration | 3000 | 3000 | 3000 |
| Treated flue gas $NO_x$ concentration | 1000 | 1000 | 1000 |
| Outlet gas concentration $SO_2$ (ppm) | 120 | 120 | 120 |
| Absorbent slurry pH (-) | 5.6 | 5.6 | 5.1 |
| Absorbent slurry $SO_3^{2-}$ (mmol/l) | <1 | <1 | 4 |
| Absorbent slurry NS Compound (mmol/l) | Non-detected | Non-detected | 25 |
| Absorbent slurry $Mn^{2+}$ (ppm) | 20 | 40 | 40 |
| Oxidation tan pH (-) | 3.5 | 3.5 | 5.1 |

Table 5   (continued)

| | Working example 4 | | | Working example 5 | | | Comparative example 2 |
|---|---|---|---|---|---|---|---|
| Addition ratio of sodium hypochlorite (mol/$l$) | 0.15 | | | 0.15 | | | 0 |
| Neutralisation tank pH (-) | 6 | 7 | 8 | 6 | 7 | 8 | 5.1 |
| Neutralisation tank ORP (mV) | 650 | 500 | 440 | 670 | 510 | 430 | - |
| Membrane filtrate Mn (ppm) | 15 | 5 | <1 | 20 | 8 | <1 | 40 |
| Membrane filtrate ClO$^-$ (ppm) | <0.1 | <0.1 | <0.1 | <0.1 | <0.1 | <0.1 | 40 |
| Membrane filtrate SO$_3{}^{2-}$ (ppm) | <1 | <1 | <1 | <1 | <1 | <1 | - |
| Membrane filtrate COD$_{Mn}$ (ppm) | <10 | <10 | <10 | <10 | <10 | <10 | 800 |

The particular description of the invention is exemplary only, and the scope of the invention is defined in the appended claims.

**Claims**

1.    A desulphurisation waste water treatment method for removing manganese from waste water, said waste water having been discharged from a wet type flue gas desulphuriser for absorbing and separating sulphur oxide in combustion flue gas by using a wet lime-gypsum process, wherein the waste water is treated with hypochlorite at a pH below 7 so that the resulting redox potential is at least 600 mV and the pH of the resulting solution is thereafter adjusted to lie in the range 7 to 9.5, followed by solid-liquid separation.

2.    A method according to claim 1 wherein sulphite/bisulphite and a heavy metal chelating agent are added between said adjustment of the pH value and said solid-liquid separation.

3.    A method according to claim 2 wherein said sulphite or bisulphite is added so that the oxidation-reduction potential is 200 mV and higher.

4.    A method according to claim 3 wherein the liquid to which said sulphite/bisulphite is added is agitated by air.

5.    A desulphurisation waste water treatment method according to any preceding claim wherein said solid-liquid separation is microfiltration membrane separation.

6.    A desulphurisation waste water treatment method according to claim 5 wherein in said membrane separation the filtrate is agitated by air.

**Patentansprüche**

1.    Entschwefelungsabwasser-Behandlungsverfahren zum Entfernen von Mangan aus Abwasser, das aus einer Abgas-Naßentschwefelungsanlage ausgestoßen wurde, zum Absorbieren und Abtrennen von Schwefeloxid in Verbrennungsabgas mit einem Kalk-Gips-Naßverfahren, wobei das Abwasser mit Hypochlorit bei einem pH-Wert unter 7 behandelt wird, so daß das resultierende Redoxpotential mindestens 600 mV beträgt, und der pH-Wert der resultierenden Lösung danach so eingestellt wird, daß er im Bereich von 7 bis 9,5 liegt, gefolgt von einer Fest-Flüssig-Trennung.

2.    Verfahren nach Anspruch 1, wobei Sulfit/Bisulfit und ein Schwermetall-Cheliermittel zwischen der Einstellung des pH-Wertes und der Fest-Flüssig-Trennung zugegeben werden.

3.    Verfahren nach Anspruch 2, wobei das Sulfit oder das Bisulfit so zugegeben wird, daß das Oxidations-Reduktions-Potential 200 mV und mehr beträgt.

4.    Verfahren nach Anspruch 3, wobei die Flüssigkeit, der das Sulfit/Bisulfit zugegeben wird, mit Luft bewegt wird.

**5.** Entschwefelungsabwasser-Behandlungsverfahren nach einem vorhergehenden Anspruch, wobei die Fest-Flüssig-Trennung eine Trennung mittels Mikrofiltermembran ist.

**6.** Entschwefelungsabwasser-Behandlungsverfahren nach Anspruch 5, wobei das Filtrat bei der Membranabtrennung mit Luft bewegt wird.


**Revendications**

**1.** Procédé de traitement des eaux usées par désulfuration pour l'enlèvement de manganèse des eaux usées, lesdites eaux usées ayant été déchargées à partir d'un désulfureur de gaz de carneau de type humide pour l'absorption et la séparation de l'oxyde de sulfure dans les gaz de carneau de combustion en utilisant un procédé chaux gypse humide, **caractérisé en ce que** lesdites eaux usées sont traitées avec de l'hypochlorite à un pH inférieur à 7 de manière telle que le potentiel redox résultant soit d'au moins 600 mV et que le pH de la solution résultante soit ensuite réajusté pour être dans la gamme comprise entre 7 et 9.5, suivi par une séparation solide/liquide.

**2.** Procédé de traitement selon la revendication 1, **caractérisé en ce que** du sulfite/bisulfite et un agent de chélation de métal lourd sont ajoutés entre ledit ajustement de la valeur du pH et ladite séparation solide/liquide.

**3.** Procédé selon la revendication 2, **caractérisé en ce que** ledit sulfite ou bisulfite est ajouté de manière à ce que le potentiel d'oxydation réduction soit 200 mV ou plus.

**4.** Procédé selon la revendication 3, **caractérisé en ce que** le liquide auquel est ajouté ledit sulfite/bisulfite est agité par de l'air.

**5.** Procédé de traitement des eaux usées par désulfuration selon l'une des revendications précédentes, **caractérisé en ce que** ladite séparation solide/liquide est une séparation membranaire par microfiltration.

**6.** Procédé de traitement des eaux usées par désulfuration selon la revendication 5, **caractérisé en ce que**, lors de ladite séparation membranaire, le filtrat est agité par de l'air.

# FIG.1

HYPOCHLORITE    ALKALINE AGENT

ORP

pH

WASTE WATER

REACTION
TANK

NEUTRALI
-ZATION
TANK

SOLID
-LIQUID
SEPARATION

TREATED
WATER

SLUDGE

# FIG.2

ALKALINE
HYPOCHLORITE    AGENT    SULFITE OR BISULFITE

HEAVY METAL
CHELATING AGENT

ORP

pH

ORP

WASTE WATER

REACTION
TANK

NEUTRALIZATION
TANK

SOLID
-LIQUID
SEPARATION

TREATED
WATER

SLUDGE

# FIG.3

HYPOCHLORITE

ALKALINE AGENT

SULFITE OR BISULFITE

HEAVY METAL CHELATING AGENT

SEPARATION MEMBRANE

ORP    pH    ORP

WASTE WATER    REACTION TANK    中和槽    TREATED WATER

AGITATING AIR

NEUTRALIZATION TANK

SOLID-LIQUID SEPARATION TANK

SLUDGE

# FIG.4

FLUE GAS

EP 1 106 237 B1

# FIG.5

PERMANGANATE

EP 1 106 237 B1

# FIG:6

FLUE GAS

EP 1 106 237 B1

# FIG.7

EP 1 106 237 B1

# FIG.8

WASTE WATER
TREATMENT

EP 1 106 237 B1

# FIG.9

EP 1 106 237 B1

WASTE WATER
TREATMENT

# FIG.10

EP 1 106 237 B1

EP 1 106 237 B1

FIG.11

TO WASTE WATER TREATMENT

TO ATMOSPHERE

31

EP 1 106 237 B1

FIG.12

TO WASTE WATER TREATMENT

TO ATMOSPHERE

32

# FIG.13

TO ATMOSPHERE

TO WASTE WATER TREATMENT

EP 1 106 237 B1